# EUROPÄISCHE PATENTSCHRIFT

(11) **EP 2 792 515 B1**
(45) Veröffentlichungstag und Bekanntmachung des Hinweises auf die Patenterteilung: **01.12.2021**
(21) Anmeldenummer: 14000876.4
(22) Anmeldetag: 12.03.2014
(51) Int. Cl.: B60F 1/04

(54) **Fahrzeugsystem zum Transportieren von Gütern auf der Schiene und auf der Strasse, Umrüstsatz zum Umrüsten eines Eisenbahnwagens zu einem Fahrzeugsystem zum Transportieren von Gütern auf der Schiene im Schienenbetrieb und auf der Strasse im Strassenbetrieb, sowie Umrüstverfahren**
Vehicle system for the transport of goods by rail and by road, conversion set for converting a rail vehicle to a vehicle system for the transport of goods by rail in rail mode and on the road in road mode, and conversion method
Système de véhicule destiné à transporter des marchandises sur rails et sur routes, kit de rééquipement de wagon d'un système de véhicule destiné à transporter des marchandises sur rails et sur routes et procédé de rééquipement

(30) Priorität: 13.03.2013 DE 102013004687
(43) Veröffentlichungstag der Anmeldung: 22.10.2014
(73) Patentinhaber: Piekorz, Bernhard, 45277 Essen (DE)
(72) Erfinder: Piekorz, Bernhard, 45277 Essen (DE)
(74) Vertreter: Grosse Schumacher Knauer von Hirschhausen

(56) Entgegenhaltungen:
- DE-A1- 2 827 738
- DE-B- 1 088 364
- DE-B- 1 118 026
- DE-C- 601 349
- DE-C- 933 033
- DE-C- 963 242
- US-A- 2 419 445
- US-A- 3 130 686
- US-A- 4 416 571
- US-A- 5 058 917
- None

## Beschreibung

### GEBIET DER ERFINDUNG

Die Erfindung betrifft ein Fahrzeugsystem zum Transportieren von Gütern auf der Schiene im Schienenbetrieb, und auf der Straße im Straßenbetrieb, nach dem Oberbegriff des Anspruchs 1. Demnach umfasst das Fahrzeugsystem ein einen Fahrzeugrahmen aufweisendes Fahrzeugchassis, welches zumindest eine Fahrzeuglängsseite und zumindest eine Fahrzeugquerseite umfasst. Bevorzugt ist der Fahrzeugrahmen des Fahrzeugchassis rechteckig gebildet. Er umfasst zwei gegenüberliegende (längere) Fahrzeuglängsseiten und zwei gegenüberliegende (kürzere) Fahrzeugquerseiten. Bei Geradeausfahrt des Fahrzeugsystems bewegt sich das Fahrzeug parallel zur Fahrzeuglängsseite. Das Fahrzeugsystem umfasst ferner ein in und/oder unter dem Fahrzeugchassis angeordnetes Fahrwerk. Das Fahrwerk des Fahrzeugsystems umfasst zwei Schienenradsätze, wodurch das Fahrzeugsystem auf Schienen respektive Eisenbahngleisen fahrbar ist. Im Übrigen umfasst das Fahrwerk des Fahrzeugsystems ein Straßenfahrwerk. Das Fahrzeugsystem umfasst ferner eine Stützeinrichtung zum Anheben und/oder Stützen des Fahrzeugchassis.

Im Übrigen betrifft die Erfindung einen Umrüstsatz zum Umrüsten eines Eisenbahnwagens zu einem Fahrzeugsystem zum Transportieren von Gütern auf der Schiene (im Schienenbetrieb) und auf der Straße (im Straßenbetrieb) gemäß dem Oberbegriff des Anspruchs 12. Demnach umfasst der Eisenbahnwagen ein Fahrzeugchassis, welches einen Fahrzeugrahmen aufweist. Das Fahrzeugchassis hat zumindest eine, bevorzugt zwei, Fahrzeuglängsseiten und zumindest eine, bevorzugt zwei, Fahrzeugquerseiten. In und/oder unter dem Fahrzeugchassis des Eisenbahnwagens ist ein Fahrwerk angeordnet, welches zumindest zwei Schienenradsätze umfasst.

Schließlich betrifft die Erfindung ein Verfahren zum Umrüsten eines Eisenbahnwagens zu einem oben beschriebenen Fahrzeugsystem gemäß dem Oberbegriff des Anspruchs 13 sowie ein Verfahren zum Umrüsten eines oben beschriebenen Fahrzeugsystems zu einem Eisenbahnwagen gemäß dem Oberbegriff des Anspruchs 14.

### TECHNOLOGISCHER HINTERGRUND

Modulare integrale Fahrzeugsysteme zur Güterbeförderung sowohl auf der Straße als auch auf der Schiene sind beispielsweise aus der DE 101 45 330 A1 oder der DE 28 27 738 A1 bekannt. Das dort beschriebene Fahrzeugsystem konnte sich jedoch in der Praxis nicht durchsetzen, obwohl es durch das immer höhere Aufkommen des Güterverkehrs auf der Straße und die dadurch bedingten steigenden Energie- und Umweltkosten immer wichtiger wird, den Güterverkehr von der Straße auf die Schiene umzuleiten. Eine Achsanordnung für Straßen- respektive Schienenfahrzeuge beschreibt die DE 963 242 C. Gängige Praxis ist weiterhin, dass Sattelauflieger, welche an eine (LKW-)Zugmaschine ankoppelbar sind, durch einen Kran auf einen Taschenwagen der Bahn gehoben werden. Alternativ dazu werden komplette Sattelzüge, dass heißt Zugmaschinen mit Sattelaufliegern, auf Niederflurfahrzeugen über die Schiene transportiert. Gemäß einer weiteren Alternative werden Sattelauflieger seitlich auf ein geeignetes Niederflurfahrzeug gezogen oder das Niederflurfahrzeug wird unter den Sattelauflieger geschoben, wie dies exemplarisch in der DE 44 01 706 A1 oder in der EP 487 427 A1 beschrieben wird. Ein Straßenfahrzeug mit einklappbaren Rädern wird in der DE 11 18 026 B beschrieben. Ebenfalls bekannt ist, dass Container mit einem Kran von einem Lkw entnommen und auf einem Eisenbahnwagen abgestellt werden, von wo aus sie über die Schiene transportierbar sind. Meist erfolgt das Beladen der Züge ausschließlich an Bahnhöfen, an denen die beschriebenen Kranvorrichtungen beispielsweise bereitgehalten werden müssen. Insofern bedarf es zum Transport von Gütern auf der Straße und auf der Schiene stets eines erheblich apparativen Aufwands, um den Güterverkehr lückenlos ablaufen zu lassen. Hier setzt die Erfindung ein.

### DARSTELLUNG DER ERFINDUNG

Die Aufgabe der Erfindung besteht im Lichte des technologischen Hintergrunds darin, den Güterverkehr auf der Straße und auf der Schiene zu vereinfachen und die damit verbundenen Kosten, insbesondere an der Schnittschnelle Straße/Schiene, zu reduzieren. Diese Aufgabe wird durch ein Fahrzeugsystem gemäß Anspruch 1 gelöst. Dabei ist vorgesehen, dass das Fahrwerk eine unter dem Fahrzeugrahmen angeordnete Trageinrichtung zum Tragen von zumindest einem, bezogen auf die Fahrzeuglängsseite des Fahrzeugsystems gegenüberliegenden Paar Straßenrad-Einzelaufhängungen für den Straßenbetrieb umfasst. Jede Straßenrad-Einzelaufhängung umfasst eine an der Trageinrichtung angeordnete Drehvorrichtung, mit der jede Straßenrad-Einzelaufhängung um jeweils eine parallel zur Richtung der Fahrzeuglängsseite des Fahrzeugsystems verlaufende Aufhängungs-Drehachse so drehbar ist, dass die Straßenrad-Einzelaufhängung im Schienenbetrieb unter das Fahrzeugchassis schwenkbar ist. Auf diese Weise wird ermöglicht, dass der Fahrzeugrahmen des Fahrzeugsystems Abmessungen aufweisen kann, die an gängige Lichtraummaße respektive an den Regellichtraum des Bahnverkehrs anpassbar sind. Die Räder des Straßenfahrwerks, welche an Straßenrad-Einzelaufhängungen angeordnet sind, können eine Gummibereifung umfassen. Sie sind straßentauglich. So kann das beschriebene Fahrzeugsystem wahlweise an einem Eisenbahnwagen oder an einer Lokomotive zum Transportieren von Gütern auf der Schiene angekuppelt werden. Sollen die Güter statt auf der Schiene auf der Straße transportiert werden, kann das beschriebene Fahrzeugsystem für den Schienenbetrieb angepasst werden. Hierzu dient die unter dem Rahmen des Fahrzeugsystems (Eisenbahnwagen) angeordnete Trageinrichtung.

Bevorzugt ist die Trageinrichtung permanent unter dem Rahmen des Eisenbahnwagens angeordnet. Dieser kann auf ein straßengleiches Abstellgleis eines Bahnhofs abgestellt werden. Indem das Fahrzeugsystem mittels der Stützeinrichtung gestützt und/oder angehoben wird, und indem die Straßenrad-Einzel-aufhängungen für den Straßenbetrieb aus der Schienenbetriebsposition in eine Straßenbetriebsposition geschwenkt werden, kann das Fahrzeugsystem beispielsweise an eine Zugmaschine eines Lastkraftwagens (LKW) gekoppelt werden, und mit der Bereifung der Stra-βenrad-Einzelaufhängungen auf der Straße gezogen und bewegt werden. Das Anheben/Absenken des Fahrzeugsystems kann mit einem höhenverstellbaren Fahrwerk oder mittels der Stützeinrichtung erfolgen. Das Fahrzeugsystem wird demnach zu einem Sattelauflieger für den Straßenverkehr angepasst. Beispielsweise bei einem Transport von sperrigen Gütern, wie Profilen, oder von Schüttgütern oder Stückgütern, ergibt sich der Vorteil, wonach die sperrigen Güter auf der Schiene und auf der Straße transportiert werden können ohne das die Güter umgeladen werden müssen. Das Fahrzeugsystem kann demnach sowohl in Kombiverkehr als auch im Fernverkehr eingesetzt werden.

Sofern das Fahrzeugsystem eine normale Straßenbreite umfasst, bedarf es keiner Sondergenehmigung für den Straßenverkehr. Im Falle einer normalen Straßenbreite sollte auch das für den Bahnverkehr relevante Regellichtraum nicht überschritten werden. Sofern das Fahrzeugsystem eine Breite aufweist, die im Schienentransportbereich gängig ist, bedarf es zum Transport im Straßenbetrieb einer Sondergenehmigung für den Straßenverkehr aufgrund einer bezogen auf die Straßenbreite gegebenen Überbreite.

Das Chassis des Fahrzeugsystems kann auf dem Chassis eines Eisenbahnwagens oder auf dem Chassis eines LKW-Anhängers basieren.

Die Trageinrichtung zum Tragen der Straßenrad-Einzelaufhängungen umfasst Mittel zur Höhenverstellung, wodurch die Trageinrichtung höhenverstellbar ist. Dabei ist die Trageinrichtung in zumindest zwei Positionen arretierbar. So kann die Trageinrichtung in einer Schienenbetriebsposition und/oder einer Straßenbetriebsposition arretierbar sein. Die Schienenbetriebsposition der Trageinrichtung kann gemäß einer bevorzugten Ausgestaltung einen geringeren Abstand der Trageinrichtung zum Chassis aufweisen als die Straßenbetriebsposition der Trageinrichtung. In der Schienenbetriebsposition der Trageinrichtung kann diese demnach weiter oben respektive in einem größeren Abstand zum Fahrzeuguntergrund arretierbar sein.

Die Trageinrichtung ist entlang einer zu der Richtung der Fahrzeuglängsseite im Wesentlichen senkrecht verlaufenden Führungsvorrichtung höhenverstellbar. Die Führungsvorrichtung umfasst dabei eine oder mehrere Führungsstangen. Bevorzugt umfasst die Führungsvorrichtung vier Führungsstangen, die jeweils paarweise im hinteren Bereich des Fahrzeugssystems angeordnet sind. Die Trageinrichtung umfasst einen biegesteifen Rahmen. Dieser kann etwa im Bereich der Rahmenecken mit den Führungsstangen der Führungsvorrichtung beim Höhenverstellen der Trageinrichtung insbesondere in einer oder mehreren zugeordneten Führungsvorrichtungen führbar sein.

Pro Straßenrad-Einzelaufhängung oder pro Seite des Fahrzeugsystems umfasst die Trageinrichtung einen mittels einer ersten Kolben-Zylinder-Einrichtung drehbaren Durchlaufträger. Der Durchlaufträger ist über eine Verriegelungseinrichtung in einer Straßenbetriebsposition des Durchlaufträgers und/oder in einer Schienenbetriebsposition des Durchlaufträgers arretierbar. Der Durchlaufträger ist in einem oder mehreren an der Trageeinrichtung angeordneten Kragarmen drehbeweglich gelagert.

So kann die erste Kolben-Zylinder-Einrichtung einerseits an der Tragseinrichtung und andererseits an Verriegelungselementen, welche an dem Durchlaufträger befestigt sind, angreifen. Durch das Betätigen der ersten Kolben-Zylinder-Einrichtung wird das Verriegelungselement und somit der damit befestigte Durchlaufträger gedreht. Indem die Straßenrad-Einzelaufhängung an dem Durchlaufträger angeordnet ist, wird durch das Betätigen der ersten Kolben-Zylinder-Einrichtung auch die Straßenrad-Einzel-aufhängung bewegt, insbesondere wird die Straßenrad-Einzelaufhängung um die durch den Durchlaufträger definierte Drehachse geschwenkt. Mittels des Verriegelungselementes kann ein Verriegeln des Durchlaufträgers respektive der Straßenrad-Einzelaufhängung in einer Straßenbetriebsposition des Durchlaufträgers und/oder in einer Schienenbetriebsposition des Durchlaufträgers erfolgen.

Die Verriegelungseinrichtung zum Verriegeln des Durchlaufträgers umfasst einen oder mehrere Bolzen, die über eine zweite Kolben-Zylinder-Einrichtung betätigbar sind. Befindet sich der drehbare Durchlaufträger in der Schienenbetriebsposition des Durchlaufträgers kann die Kolben-Zylinder-Einrichtung den Bolzen der Verriegelungseinrichtung in eine Bolzenaufnahme bewegen. Befindet sich der Durchlaufträger in einer Straßenbetriebsposition des Durchlaufträgers kann die Kolben-Zylinder-Einrichtung den Bolzen in eine zweite Bolzenaufnahme hinein bewegen. Die Kolben-Zylinder-Einrichtungen können einem oder mehreren Antrieben zugeordnet sein, wobei vorgesehen sein kann, dass der Antrieb die Einrichtungen pneumatisch mit Energie beaufschlagt.

Jede Straßenrad-Einzelaufhängung kann eine Übertragungsvorrichtung zum Übertragen von Kräften, insbesondere Längskräften, und/oder Momenten, insbesondere Reaktionsmomenten, von dem Straßenrad auf die Trageinrichtung umfassen. Die Übertragungsvorrichtung kann einen Längslenker umfassen, der über eine Drehverbindung an der Trageinrichtung so angeordnet ist, dass der Längslenker um einer Drehachse auslenkbar ist, die parallel zur Fahrzeugquerseite verläuft. Alternativ zu dem Längslenker kann die Übertragungsvorrichtung einen Raumlenker umfassen. Es kann vorgesehen sein, dass die Übertragungseinrichtung eine oder mehrere dritte Kolben-Zylinder-Einrichtungen umfasst. Diese können beispielsweise als Stoßdämpfer gebildet sein oder einen Stoßdämpfer umfassen. Über die dritte Kolben-Zylinder-Einrichtung sind seitliche Kräfte des Straßenrads während der Fahrt in den Durchlaufträger und somit in die Trageinrichtung übertragbar. Die Enden des oder der Stoßdämpfer können dabei kugelförmig gestaltet sein. Das kugelförmige Ende des Stoßdämpfers kann in eine kugelförmige Aufnahme greifen, welche am Durchlaufträger angeordnet ist.

Damit die Übertragungsvorrichtung während der Straßenfahrt des Fahrzeugsystems nicht seitlich ausweichen kann und so die Fahrstabilität des Fahrzeugsystems gefährden kann, können Führungsmittel zum geführten Bewegen des Übertragungsmittels an der Trageinrichtung vorgesehen sein. Die Führungsmittel können Kulissenführungen respektive Führungsbahnen umfassen, in denen Führungsrollen geführt werden können, welche an der Übertragungseinrichtung angeordnet sind. Die Führungsrollen können über eine Steckachse an der Übertragungseinrichtung befestigt sein.

Das Fahrwerk des Fahrzeugsystems umfasst eine unter dem Rahmen angeordnete Trageinrichtung zum Tragen eines Straßenfahrwerks für den Straßenbetrieb. Die Trageinrichtung ist als unterspannbarer oder unterspannter Träger gebildet und sie umfasst zumindest ein zur Richtung entlang der Fahrzeuglängsseite im Wesentlichen parallel verlaufendes Tragelement. Das Tragelement kann in der Trageinrichtung so anordbar sein, dass ein, insbesondere durch Güter, verursachtes und auf die Trageinrichtung übertragendes Biegemoment keine oder zumindest kaum eine Lageveränderung des Tragelements bewirkt. Dadurch wird die Arretierung des Stra-βenfahrwerkes an der Trageinrichtung weder im Straßenbetrieb noch im Schienenbetrieb blockiert oder gestört.

Das Tragelement kann Befestigungseinrichtungen umfassen, die in einer oder mehreren Führungs- und/oder Halteeinrichtungen der Trageinrichtung anordbar sind. Die Führungs- und/oder Halteeinrichtungen können einer Führungsrichtung der Trageinrichtung zugeordnet sein. Schließlich kann ein Verriegelungs-Zylinder vorgesehen sein, mit dem der unterspannbare Träger in zumindest einer, bevorzugt zwei, Positionen verriegelbar ist.

Gemäß einer bevorzugten Ausgestaltung des erfindungsgemäßen Fahrzeugsystems kann vorgesehen sein, dass eine Kupplungseinrichtung zum Ankuppeln des Fahrzeugsystems an ein Zugfahrzeug und/oder an ein an einem Zugfahrzeug angekuppeltes Transportfahrzeug vorgesehen ist. Die Kupplungseinrichtung dient stets dem Kuppeln, d. h. dem Ankuppeln und/oder dem Abkuppeln. Sofern im Folgenden die Rede vom Ankuppeln ist, wird damit auch ein Ankuppeln berücksichtigt. Die Kupplungseinrichtung kann - bezogen auf die Fahrtrichtung - vorne und/oder hinten angeordnet sein. Zum Ankuppeln des erfindungsgemäßen Fahrzeugsystems an einen Lastkraftwagen respektive an eine Zugmaschine eines Sattelzugs kann die Kupplungseinrichtung einen Königszapfen umfassen. Alternativ kann auch eine Deichsel vorgesehen sein, mit der das Fahrzeugsystem an einen Lastkraftwagen (LKW) koppelbar ist. Im Übrigen können Schienenfahrzeugkupplungen vorgesehen sein, mit denen das Fahrzeugsystem an ein Schienenfahrzeug ankuppelbar ist. Die Schienenfahrzeugkupplung kann sich im vorderen und/oder im hinteren Bereich des Fahrzeugsystems befinden. Sofern eine Schienenfahrzeugkupplung vorgesehen ist, kann vorgesehen sein, dass im vorderen Bereich und/oder im hinteren Bereich Puffer angeordnet sind. Insofern kann die Kupplungseinrichtung des erfindungsgemäßen Fahrzeugsystems zumindest einen Puffer umfassen. Der Puffer kann beispielsweise in dem Fahrzeugchassis oder in dem Rahmen des Fahrzeugchassis versenkbar sein. Die Kupplungseinrichtung kann ferner ein Lager, etwa ein (Groß-)Wälzlager, und/oder einen Lenkkranz umfassen.

Vorteilhafterweise ist der Schienenradsatz aus seiner Schienenbetriebsposition anhebbar und/oder außerhalb der Schienenbetriebsposition in der Höhe variierbar. In diesem Fall würde bei einer Umwandlung des Fahrzeugsystems vom Schienenbetrieb in den Straßenbetriebe nicht nur das Straßenfahrwerk abgesenkt, sonder zusätzlich würde jeder Schienenradsatz des Fahrzeugfahrwerks angehoben und in einer angehobenen Straßenbetriebsposition des Schienenradsatzes arretiert. Das Anheben und Absenken der Fahrwerkskomponenten kann immer dann erfolgen, wenn das Fahrzeugsystem mittels der Stützeinrichtung angehoben und stabilisiert ist.

Maßnahmen, um den Güterverkehr auf der Straße und auf der Schiene zu vereinfachen, und die damit verbundenen Kosten, insbesondere an der Schnittschnelle Straße/Schiene, zu reduzieren, ergeben sich ferner durch einen Umrüstsatz zum Umrüsten eines Eisenbahnwagens zu einem, insbesondere hier beschriebenen, Fahrzeugsystem zum Transportieren von Gütern auf der Schiene im Schienenbetrieb, und auf der Straße im Straßenbetrieb, gemäß Anspruch 12. Der Umrüstsatz umfasst demnach eine, insbesondere unter dem Fahrzeugrahmen anordbare, Trageinrichtung, an der zumindest ein, bezogen auf die Fahrzeuglängsseite des Eisen-bahnwagens gegenüberliegendes Paar Straßenrad-Einzelaufhängungen für den Straßenbetrieb angeordnet sind. Jede Straßenrad-Einzelaufhängung umfasst eine an der Trageinrichtung angeordnete Drehvorrichtung, mit der jede Straßenrad-Einzelaufhängung um jeweils eine parallel zur Richtung der Fahrzeuglängsseite des Fahrzeugsystems verlaufende Radaufhängungs-Drehachse so drehbar ist, dass die Straßenrad-Einzelaufhängung im Schienenbetrieb unter das Fahrzeugchassis schwenkbar ist. Der Umrüstsatz umfasst ferner eine Stützeinrichtung zum Anheben und/oder zum Stützen des Fahrzeugchassis. Mit dem erfindungsgemäßen Umrüstsatz wird es möglich, bereits hergestellte respektive bereits im Betrieb befindliche Eisenbahnwagen zu einem Fahrzeugsystem umzurüsten, das sowohl auf der Schiene als auch auf der Straße einsetzbar ist. Hierdurch werden Transportmaßnahmen auf Schiene und/oder Straße insoweit erheblich vereinfacht, als ein Umladen der Transportgüter, welche sich auf dem Eisenbahnwagen befinden, auf einen LKW-Anhänger oder auf einen Sattelzug überflüssig werden.

Die Trageinrichtung umfasst einen unterspannbaren Träger, welcher unter dem Fahrzeugrahmen anordbar ist. Der erfindungsgemäße Umrüstsatz kann bevorzugt dadurch gekennzeichnet sein, dass seine Abmessungen das Lichtraummaß des mit dem Umrüstsatz ausgestatteten Eisenbahnwagens nicht beeinflusst. Die Trageinrichtung umfasst einen biegesteifen Rahmen, wobei die Trageinrichtung pro Straßenrad-Einzelaufhängung oder pro Seite des Fahrzeugsystems einen mittels einer ersten Kolben-Zylinder-Einrichtung drehbaren Durchlaufträger umfasst, der über eine Verriegelungseinrichtung in einer Straßenbetriebsposition und/oder in einer Schienenbetriebsposition arretierbar ist, und der in einem oder mehreren an der Trageinrichtung angeordneten Kragarmen drehbeweglich gelagert ist, und wobei die Verriegelungseinrichtung zum Verriegeln des Durchlaufträgers Bolzen umfasst, die über eine zweite Kolben-Zylinder-Einrichtung betätigbar sind

Maßnahmen, um den Güterverkehr auf der Straße und auf der Schiene zu vereinfachen, und die damit verbundenen Kosten, insbesondere an der Schnittschnelle Straße/Schiene, zu reduzieren, ergeben sich ferner durch ein Verfahren zum Umrüsten eines Eisenbahnwagens zu einem Fahrzeugsystem zum Transportieren von Gütern auf der Schiene im Schienenbetrieb, und/oder auf der Straße im Straßenbetrieb, gemäß Anspruch 13. Dabei ist vorgesehen, dass das Fahrzeugchassis des Eisenbahnwagens mittels einer Stützeinrichtung zum Anheben zum und/oder Stützen des Fahrzeugchassis angehoben wird. Zumindest ein Schienenradsatz wird aus der Position für den Schienenbetrieb in eine Position für den Straßenbetrieb angehoben. Straßenrad-Einzelaufhängungen werden aus einer Position für den Schienenbetrieb mittels einer an einer Trageinrichtung angeordneten Drehvorrichtung um parallel zur Richtung der Fahrzeuglängsseite des Eisenbahnwagens verlaufende Radaufhängungs-Drehachsen in eine Straßenbetriebsposition geschwenkt. Es wird eine Kupplungseinrichtung zum Ankuppeln des Eisenbahnwagens an ein Zugfahrzeug betätigt. Außerdem wird das Fahrzeugchassis des Eisenbahnwagens mittels der Stützeinrichtung zum Anheben und/oder Stützen des Fahrzeugchassis abgesenkt.

Weitere Maßnahmen, um den Güterverkehr auf der Straße und auf der Schiene zu vereinfachen, und die damit verbundenen Kosten, insbesondere an der Schnittschnelle Straße/Schiene, zu reduzieren, ergeben sich durch ein Verfahren zum Umrüsten eines Fahrzeugsystems zum Transportieren von Gütern auf der Schiene im Schienenbetrieb, und auf der Straße im Straßenbetrieb, zu einem Eisenbahnwagen, gemäß Anspruch 14. Demnach ist vorgesehen, dass das Fahrzeugchassis des Fahrzeugsystems mittels einer Stützeinrichtung zum Anheben und/oder Stützen des Fahrzeugchassis angehoben wird. Eine Kupplungseinrichtung zum Abkuppeln des Fahrzeugsystems von einem Zugfahrzeug wird betätigt. Straßenrad-Einzelaufhängungen werden aus einer Straßenbetriebsposition mittels einer an einer Trageinrichtung angeordneten Drehvorrichtung um parallel zur Richtung der Fahrzeuglängsseite des Eisenbahnwagens verlaufende Radaufhängungs-Drehachsen in eine Schienenbetriebsposition geschwenkt. Zumindest ein Schienenradsatz wird aus der Position für den Straßenbetrieb in eine Schienenbetriebsposition abgesenkt. Das Fahrzeugchassis des Eisenbahnwagens wird mittels der Stützeinrichtung zum Anheben und/oder Stützen des Fahrzeugchassis abgesenkt.

Die vorgenannten sowie beanspruchten und in den Ausführungsbeispielen beschriebenen erfindungsgemäß zu verwendenden Bauteile unterliegen in ihrer Größe, Form, Gestalt und Materialauswahl sowie technischen Konzeptionen keinen besonderen Ausnahmebedingungen, sodass die in dem Anwendungsgebiet bekannten Auswahlkriterien uneingeschränkt Anwendung finden können.

Weitere Einzelheiten, Merkmale und Vorteile des Gegenstands der Erfindung ergeben sich aus den Unteransprüchen, sowie aus der nachfolgenden Beschreibung und der dazugehörigen Zeichnung, in der - beispielhaft - ein Ausführungsbeispiel eines Fahrzeugsystems dargestellt ist. Auch einzelne Merkmale der Ansprüche oder der Ausführungsform können mit anderen Merkmalen anderer Ansprüche und Ausführungsformen kombiniert werden.

### KURZBESCHREIBUNG DER FIGUREN

### In der Zeichnung zeigen

- Fig. 1: eine seitliche Ansicht eines an eine Zugmaschine angekuppelten Fahrzeugsystems,
- Fig. 2: eine perspektivische Ansicht eines Fahrzeugsystems,
- Fig. 3: ein Detail der perspektivischen Ansicht gemäß Fig. 2,
- Fig. 4: eine Ansicht der Stirnseite eines Fahrzeugsystems,
- Fig. 5: eine seitliche Ansicht des Fahrwerks eines Fahrzeugsystems,
- Fig. 6: eine perspektivische Detailansicht des Fahrwerks eines Fahrzeugsystems,
- Fig. 7A-E: verschiedene Ansichten einer Variante eines Fahrzeugsystems mit zumindest einem stoßgedämpften Längslenker,
- Fig. 8A-C: alternative Ausgestaltung eines Fahrzeugsystems in verschiedenen Ansichten,
- Fig. 9A,B: Detailansichten von Steckachsen des Fahrzeugsystems,
- Fig. 10A-D: Detailansichten der Radaufhängung von Varianten des Fahrzeugsystems, und
- Fig. 11A,B: Varianten des Fahrzeugsystems mit unterschiedlichen Ausgestaltungen der Kupplungseinrichtung.

### DETAILLIERTE BESCHREIBUNG VON AUSFÜHRUNGSBEISPIELEN

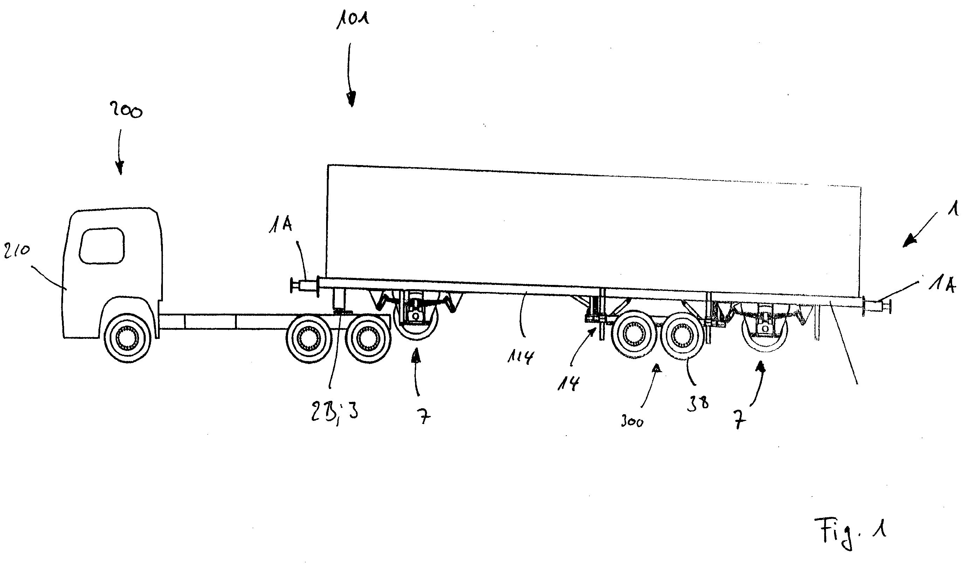

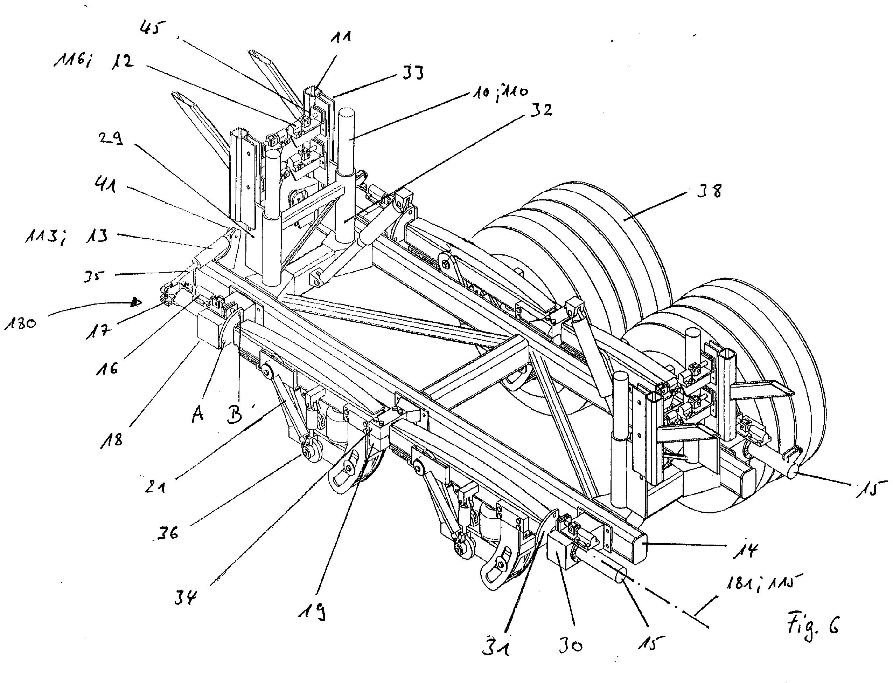

Die in den Figuren 1 - 10 dargestellten Fahrzeugsysteme 101 betreffen Eisenbahnwagen 1, die durch eine Vorrichtung mit Gummibereifung auf die Straße gestellt und durch einen Königszapfen 2 an einer Zugmaschine 210 angehängt werden. Wahlweise kann der Eisenbahnwagen 1 auf der Schiene sowie auf der Straße als Sattelauflieger eingesetzt werden.

Die Figuren 1 - 10 zeigen einen Eisenbahnwagen 1, auf dem das Fahrzeugsystem 101 basiert, welcher mit mehreren Vorrichtungen ausgestattet ist, die permanent unter dem Rahmen 114 des Eisenbahnwagens 1 befestigt sind. Dieser kann auf ein Straßengleiches Abstellgleis eines Bahnhofs abgestellt werden, um ihn zu einem Sattelauflieger für den Straßenverkehr umzurüsten. Ein Vorteil der Fahrzeugsysteme gemäß den Figuren 1 - 10 besteht in dem Transport von Containern und/oder von sperrigen Gütern, wie Schüttgütern, Stückgütern, Profilen, etc, die auf der Schiene 400 sowie auf der Straße transportiert werden können. Ein Umladen der Güter ist nicht erforderlich. Die Fahrzeuge 101 können sowohl im Kombiverkehr als auch im Fernverkehr eingesetzt werden.

Das erfindungsgemäße Fahrzeugsystem 101 kann auf Eisenbahnwagen 1 basieren, die für den Schienentransport gebaut sind, und wegen ihrer Überbreite eine Sondergenehmigung für den Straßenverkehr beantragen müssen. Alternativ können solche Eisenbahnwagen 1 vorgesehen sein, die für eine normale Straßenbreite tauglich sind. Die Vorrichtungen zum Umrüsten des Eisenbahnwagens 1 gemäß den Figuren 1 - 10 sind permanent unter dem Rahmen 114 des Eisenbahnwagens 1 angeordnet und werden dort stets mit transportiert. Das Fahrwerk der Fahrzeugsysteme 101 gemäß den Figuren 1 - 10 umfasst Räder 38 mit Gummibereifung.

Eine seitlich Ansicht eines Fahrzeugsystems 101 im Straßenbetrieb kann der Fig. 1 entnommen werden. Das Fahrzeugsystem 101 ist an einer Zugmaschine 210 eines Lastkraftwagens 200 (LKW) über einen Königszapfen 2 angekuppelt. Unter dem Fahrzeugsystem 101 ist ein Fahrwerk, welches zwei Paare von Straßenrad-Einzelaufhängungen 150 umfasst. Die Straßenräder 38 befinden sich in der Stra-βenbetriebsposition B, so dass das Fahrzeugsystem 101 gemäß Fig. 1 auf der Straße bewegbar ist. Der Fig. 1 können ferner zwei Fahrwerke für den Schienenbetrieb entnommen werden, die gegenüber einer (in Fig. 1 nicht dargestellten) Schienenbetriebsposition A angehoben sind. Am vorderen Ende und am hinteren Ende des Fahrzeugchassis des Fahrzeugsystems 101 sind Puffer 1A dargestellt, die dem Schienenbetrieb vorbehalten sind. Für den Straßenbetrieb werden die an einer biegesteifen Vorrichtung befestigten Puffer 1A etwa durch Kolben-Zylinder-Einrichtungen respektive hydropneumatische Vorrichtungen in den Rahmen 114 des Eisenbahnwagens 1 versenkt und dort gegebenenfalls verriegelt.

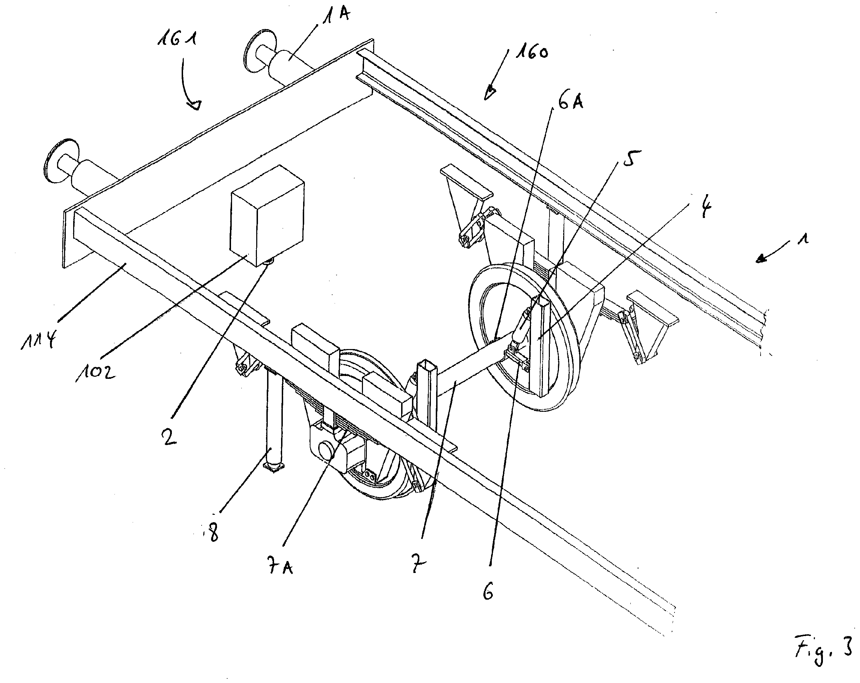

Die Fig. 1 zeigt auch eine Vorrichtung für Eisenbahnwagen 1, durch die der Eisenbahnwagen 1 zu einem Sattelauflieger umrüstbar ist. Der an dem Eisenbahnwagen 1 befestigte, nach unten abstehende und genormte Königszapfen 2 mit einer Halterung 3 liegt zwischen einem Radsatz 7 und dem hinteren Ende des Eisenbahnwagens 1. Ausfahrbare Stützen 8 zum Anheben des Chassis sind am vorderen und hinteren Ende des Wagens 1 angeordnet. Sie sind jeweils an beiden Seiten des Eisenbahnwagens 1 montiert, wie den Figuren 1 und 3 entnommen werden kann.

Die Anordnung umfasst ferner Hebevorrichtungen 4 zum anheben der Radsätze 7, wobei die Radsätze 7 nach dem Anheben in der Straßenbetriebsposition B arretiert werden. Ein Schwingen der Radsätze 7 in den Federpaketen 7A wird somit vermieden. Die Hebevorrichtung 4 besteht aus einem Stahlbau-Profil, einer Kolben-Zylinder-Einrichtung und einem beweglichen Arm 6. Ferner umfasst die Hebevorrichtung 4 einen Halter 6A zur Aufnahme des Radsatzes 7.

Unter dem Eisenbahnwagen 1 befinden sich biegesteife Verbände und Führungsstangen, an denen ein biegesteifer Rahmen 14 durch die Kolben-Zylinder-Einrichtung auf und ab bewegbar ist.

Das Umrüsten des in Fig. 1 dargestellten Eisenbahnwagens 1 aus der Parkposition in die Schienenfahrt wird wie folgt durchgeführt: Um den Eisenbahnwagen 1 zu einem Sattelauflieger umzurüsten, wird dieser auf ein Straßengleiches Abstellgleis gefahren.

Die hydraulischen Stützbeine 8 werden ausgefahren und die Radsätze 7 heben vom Gleis 400 ab. Anschließend werden die Schienenradsätze 7 durch die Hebevorrichtungen 4 angehoben und erreichen die Stellung Straßenfahrt, welche in Fig. 1 dargestellt ist. Danach wird die Hebevorrichtung 4 verriegelt, damit die Schienenradsätze 7 während der Straßenfahrt in den Federpaketen 7A nicht mehr schwingen können.

Es kann alternativ vorgesehen sein, dass die Stützbeine 8 ausgefahren werden, um das Fahrzeugsystem 101 zu stützen, ohne es anzuheben. Die Fahrwerksposition des Fahrwerks wird anschließend in der Höhe verändert, so dass der Kontakt zur Straße unterbrochen wird. Anschließend wird das Fahrwerk in die jeweils andere Betriebsposition geschwenkt.

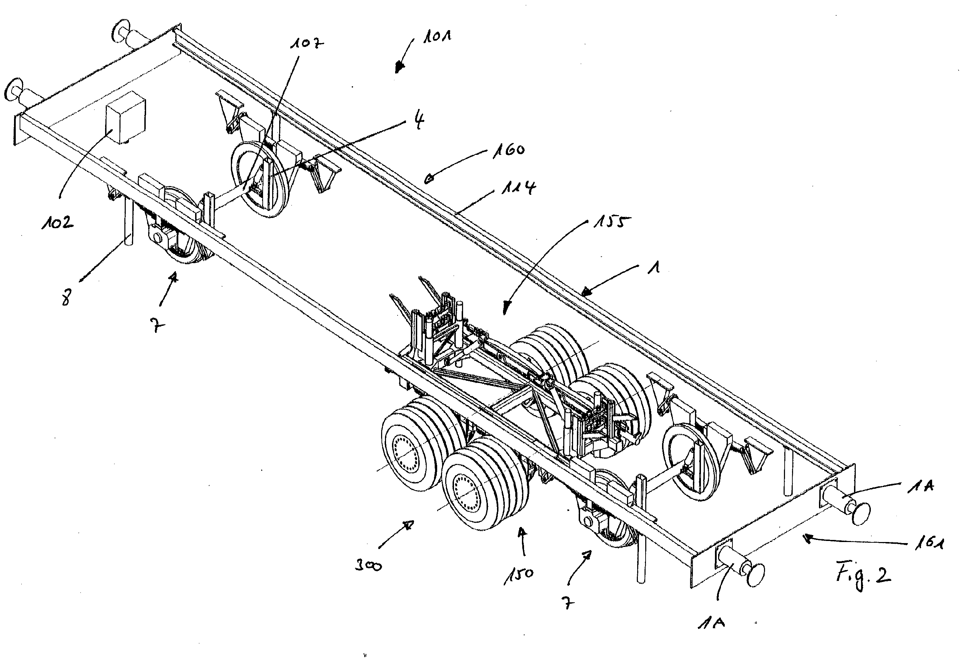

Eine perspektivische Ansicht des Rahmens 114 eines Fahrzeugsystems kann der Fig. 2 entnommen werden. Das Chassis umfasst den Fahrzeugrahmen 114 mit einer Fahrzeuglängsseite 160 und einer Fahrzeugquerseite 161. Im Bereich der vorderen Fahrzeugquerseite 161 ist eine Kupplungseinrichtung 102 vorgesehen, mit der das Fahrzeugsystem 101 an ein anderes Fahrzeug ankuppelbar ist. Unter dem Chassis ist ein Fahrwerk angeordnet. Das Fahrwerk umfasst zwei Schienenradsätze 7 und ein Straßenfahrwerk 300. Zum Anheben respektive Stützen des Chassis ist eine Stützeinrichtung 8 vorgesehen.

Unter dem Fahrzeugrahmen 114 ist eine Trageinrichtung 155 angeordnet. Der Trageinrichtung 155 sind mehrere Straßenrad-Einzelaufhängungen 150 zugeordnet. Gemäß Fig. 2 sind mehrere, insbesondere zwei, Paare - bezogen auf die Fahrzeuglängsseite 160 gegenüberliegender - Straßenrad-Einzelaufhängungen 150 vorgesehen.

Ein detaillierter Ausschnitt der Darstellung des Fahrzeugsystems 101 gemäß Fig. 2 kann der Fig. 3 entnommen werden. Der Fig. 3 ist zu entnehmen, dass dem Schienenradsatz 7 eine Hebevorrichtung 4 zugeordnet ist, mit der der Schienenradsatz 7 vertikal anhebbar ist bzw. mit dem das Fahrzeugsystem 101 (bis zum Stützbetrieb der Stützbeine) absenkbar ist. In der oberen (Straßenbetriebs-)Position B ist der Schienenradsatz 7 arretierbar respektive verriegelbar, damit der Schienenradsatz 7 in den Federpaketen 7A nicht mehr schwingen kann. Das Anheben erfolgt mittels eines Zylinders 5. Der Schienenradsatz 7 wird über einen Arm 6 und einen Halter 6A getragen, wobei der Arm 6 in der Hebevorrichtung 4 geführt ist.

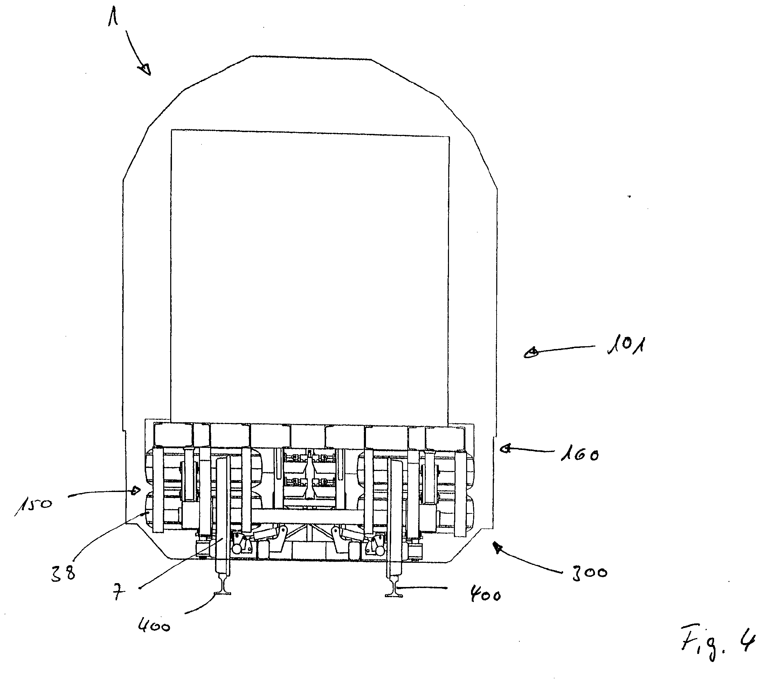

Eine stirnseitige Ansicht des Fahrzeugsystems 101 mit Blick auf die Fahrzeugquerseite 161 kann der Fig. 4 entnommen werden. Es ist nicht vorgesehen, dass ein Teil der Vorrichtung des erfindungsgemäßen Fahrzeugsystems 101 über das Lichtraummaß des Schienenweges hinausragt. Hierdurch wird vermieden, dass im Fahrbereich angeordnete Betriebsausrüstungen des Schienenwegs beschädigt werden.

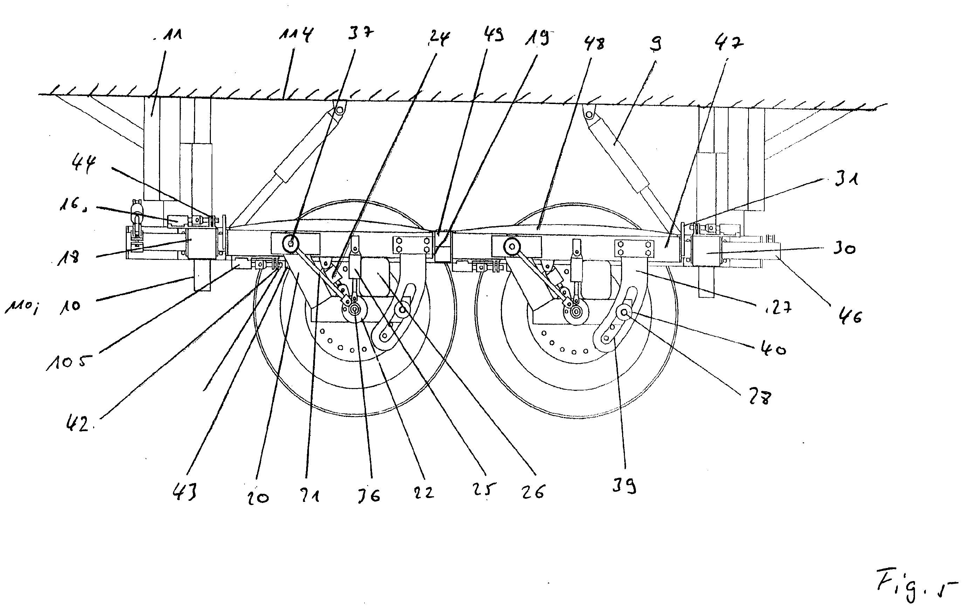

Die Fig. 5 zeigt einen Ausschnitt einer seitlichen Ansicht des Fahrzeugsystems 101 mit Blick auf die Fahrzeuglängsseite 160. In der Fig. 5 ist der Fahrzeugrahmen 114 am oberen Bildrand angedeutet. Unter dem Fahrzeugrahmen 114 ist eine Trageinrichtung 155 angeordnet. An der Trageinrichtung 155 sind mehrere Straßenrad-Einzelaufhängungen 150 angeordnet, in der Straßenräder 38 an Steckachsen (36, 37) gelagert sind. Die Trageinrichtung 155 ist vertikal, d. h. in der Höhe, entlang einer Führungsvorrichtung 10 mit mehreren Führungsstangen 110 verstellbar und in zumindest zwei Positionen arretierbar. In Fig. 5 ist die Straßenbetriebsposition B dargestellt. Aus der Straßenbetriebsposition B sind die Straßenrad-Einzelaufhängungen 150 in eine (in Fig. 5 nicht dargestellte) Schienenbetriebsposition (A) mittels einer Drehvorrichtung (180 in Verbindung mit Zylinder 113) um einen Winkel von etwa 90° drehbar. Das Drehen der Straßenrad-Einzelaufhängungen 150 erfolgt um eine Drehachse 181, die parallel zur Richtung der Fahrzeuglängsseite 160 verläuft. So können die Straßenrad-Einzelaufhängungen 150 unter den Fahrzeugrahmen 114 geschwenkt werden, d. h. gemäß Fig. 5 in die Zeichenebene hinein oder aus der Zeichenebene heraus.

Die Trageinrichtung 155 umfasst einen biegesteifen Rahmen 14, an dem Durchlaufträger 15 angeordnet sind. Die Durchlaufträger 15 befinden sich auf beiden Fahrzeuglängsseiten 160. Der Fig. 5 kann ferner entnommen werden, dass die Räder 38 einer Straßenrad-Einzelaufhängung 150 zugeordnet sind, welche (jeweils) an einem Längslenker 20 befestigt ist. Dies ist insbesondere dem Umstand geschuldet, dass es durch die Drehung der Radaufhängungen 150 keine Verbindung gegenüberliegender Achsen gibt. Der biegesteife Rahmen 14 wird durch die Kolben-Zylinder-Einrichtung (105) entriegelt und aus der Schienenbetriebsposition A, die in Fig. 4 dargestellt ist, durch Kolben-Zylinder-Einrichtungen (9) nach unten bewegt.

Wenn der biegesteife Rahmen 14 mit dem Verriegelungsblech 31 die Straßenbetriebsposition B (dargestellt in Fig. 1) erreicht hat, wird das Verriegelungsblech 29 mit den Führungsblechen 33 am Verband durch den an den zweiten Kolben-Zylinder-Einrichtungen 116 befestigten Bolzen 45 verriegelt. Die zweiten Kolben-Zylinder-Einrichtungen 116 sind an den Führungsblechen 33 montiert. Anschließend wird die auf dem Kragarm (18, 30) befestigte Verriegelung 16, die den Durchlaufträger 15 mit dem Verriegelungsblech 31 in der Schienenbetriebsposition A gemäß Fig. 4 hält, gelöst. Somit kann der Zylinder 13 einer ersten Kolben-Zylinder-Einrichtung 113 den Durchlaufträger 15 in die Straßenbetriebsposition B drehen. Nachdem der Durchlaufträger 15 mit dem Verriegelungsblech 31 die Straßenbetriebsposition B erreicht hat, wird er durch den Zylinder 16 einer Kolben-Zylinder-Einrichtung und durch einen Bolzen 44 verriegelt.

In der Schienenbetriebsposition A ist der Längslenker 20 mit der Bolzenaufnahme (43) durch den auf dem Durchlaufträger 15 befestigten Zylinder (29) mit dem Bolzen (42) verriegelt, damit der Längslenker 20 während einer Schienenfahrt (gemäß Fig. 4) nicht schwingt. Der Längslenker 20 ist während der Straßenbetriebsposition B entriegelt. Abschließend wird der Sattelauflieger auf seine Räder 38 abgestellt.

Die Steckachsen 36 in dem Längslenker 20 und dem Rad 38 an dem Durchlaufträger 15 bilden mit der Steckachse 36 in dem Längslenker 20 und dem Rad 38 an dem Durchlaufträger 15 auf der gegenüberliegenden Seite des Rahmens 14 eine (oder mehrere) fluchtende, insbesondere kollineare, (gedachte) Achse(n).

Am biegesteifen Rahmen 14 können Längslenker und/oder eine, zwei oder mehrere Achsen vorhanden sein. Die Verriegelungen werden über Endschalter betätigt, die in den Figuren nicht dargestellt sind.

An dem biegesteifen Rahmen 14 sind Befestigungsbleche 41 zur Aufnahme der ersten Kolben-Zylinder-Einrichtung 113 vorgesehen. Zwischen den Führungsblechen 33, welche am Verband 11 befestigt sind, wird das Verriegelungsblech 29 am biegesteifen Rahmen 14 auf und ab bewegt. Der Rahmen 14 und der Verband 11 bilden einen unterspannten Träger. In der Straßenbetriebsposition B wird das Verriegelungsblech 29 mit den an den Führungsblechen 33 befestigten Kolben-Zylinder-Einrichtungen und daran befestigten Bolzen 45 verriegelt. Die Führungsvorrichtung kann an einem Rundmaterial 32 angeordnet sein. An dem biegesteifen Rahmen 14 sind Kragarme (18, 30) für die Aufnahme von Durchlaufträgern 15 befestigt, wobei zur Unterstützung des Durchlaufträgers 15 ein Kragarm 19 mit einem zweiteiligen Lager (19) am biegesteifen Rahmen 14 montiert ist. Der Durchlaufträger 15 ist auf beiden Seiten des biegesteifen Rahmens 14 montiert.

An dem Durchlaufträger 15 ist eine Klemmverbindung 17 mit Halterung montiert, woran die Kolbenstange 35 der ersten Kolben-Zylinder-Einrichtung 113 befestigt ist, um die Durchlaufachse 115 zu drehen. Auf den Kragarmen (18, 30) sind jeweils Kolben-Zylinder-Einrichtungen (16) mit Bolzen 44 montiert, die den Durchlaufträger 15 in der Straßenbetriebsposition B oder in der Schienenbetriebsposition A verriegeln.

Am Durchlaufträger 15 sind zwei Längslenker 20 an zwei Steckachsen 37 befestigt, wobei der Längslenker 20 eine Luftfederung 26 aufweist. Über die Luftfederung 26 ist der Längslenker 20 am Durchlaufträger 15 federnd abgestützt. Der Längslenker 20 ist über einen hydraulischen Stoßdämpfer 24 am Durchlaufträger 15 elastisch abgestützt. Die Steckachse 36 mit der befestigten Scheibe 22 und der Bremstrommel sind am Längslenker 20 montiert. Zudem ist das Rad 38 an der Steckachse 36 befestigt. Der Längslenkerstab 21 wird auf der Steckachse 37 montiert und ist mit der Scheibe 22 an der Steckachse 36 verbunden und dient dabei als Drehmomentstütze. Die Steckachse 36 mit der Scheibe 22 wird über den Stoßdämpfer 25 am Durchlaufträger 15 federnd abgestützt.

Am Ende des Längslenkers 20 ist eine Steckachse mit Führungsrollen 40 befestigt, die in den Führungsbahnen 39 der Führungsvorrichtung 27 geführt wird, wobei die Führungsvorrichtung 27 am Durchlaufträger 15 montiert ist, um ein seitliches Verschieben des Längslenkers 20 zu verhindern.

Unterhalb des Durchlaufträgers 15 ist ein Zylinder (105) mit Bolzen 42 montiert. Während der Schienenfahrt, dass heißt in der Schienenbetriebsposition A (Fig. 4), verriegelt der Zylinder (105) mit dem Bolzen 42 den Längslenker 20 mit der Bolzenaufnahme 43. Bei der Straßenfahrt (dargestellt in Fig. 1) ist der Längslenker 20 entriegelt. Die Symmetrieachse der Steckachse am Längslenker 20 fluchtet mit der gegenüberliegenden Symmetrieachse der Steckachse am Längslenker 20. Es kann zweckmäßig sein, wenn gegenüberliegende Längslenker gleichgroß oder nahezu gleichgroß ausgebildet sind, wodurch ein gleiches oder nahezu gleiches Schwingungsverhalten erreicht wird.

Der Durchlaufträger 15 kann aus Rundmaterial 46 für die Lagerung in den Kragarmen 18, 30 bestehen und/oder aus einem Rechteckprofil 47. Es kann eine, insbesondere nach oben zum Rahmen 114 hinweisende, Profilverstärkung 48 vorgesehen sein, die ähnlich der Biegelinie des Durchlaufträgers 15 ausgebildet ist, um die Durchbiegung gering zu halten. Für die Lagerung des Kragarms (19) kann bevorzugt Rundmaterial 49 vorgesehen sein. Mit dem Durchlaufträger 15 sind zwei Verriegelungsbleche 31 verbunden, die zwischen den Kragarmen angeordnet sind.

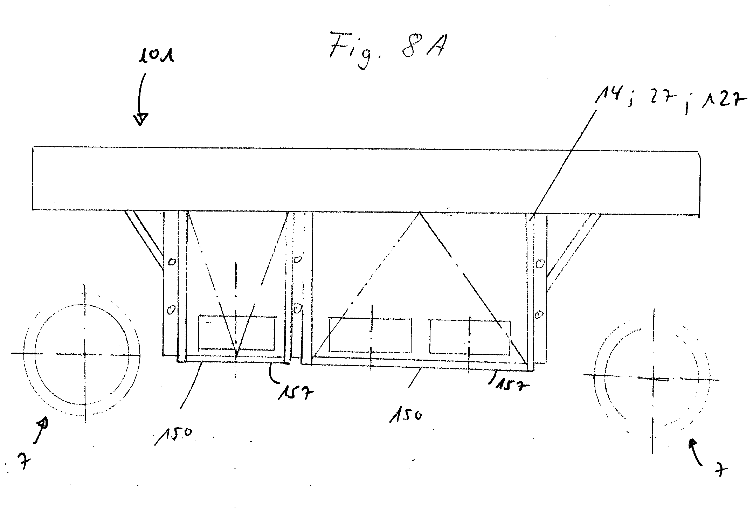

Gemäß einer bevorzugten Ausgestaltung des Fahrzeugsystems 101 können mehr als zwei Längslenker 20 und mehr als zwei Führungsvorrichtungen 27 sowie mehr als ein Kragarm vorgesehen sein. Insbesondere können die Kragarme mit einer zweigeteilten Lagerung befestigt sein. Statt eines Durchlaufträgers kann wahlweise ein Träger mit einem Längslenker und einer Führungsvorrichtung vorgesehen sein (Fig. 8A bis 8C).

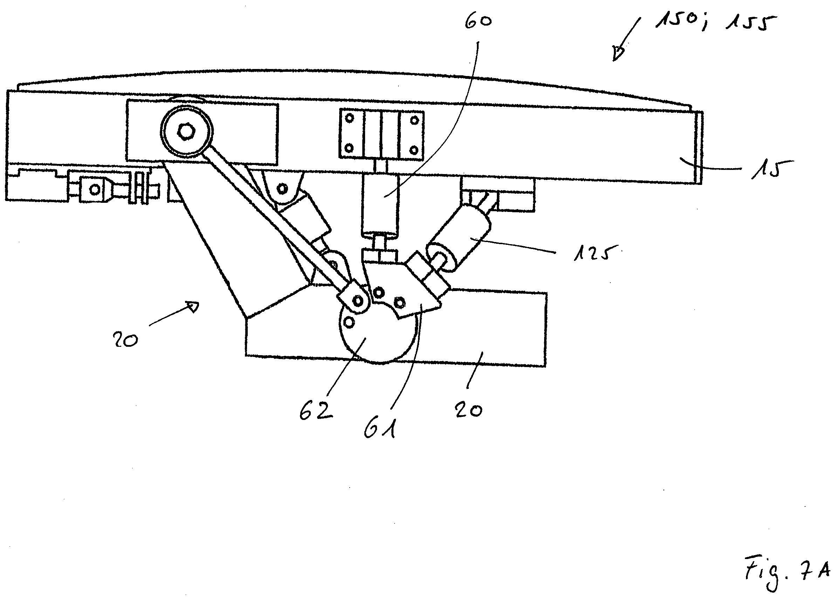

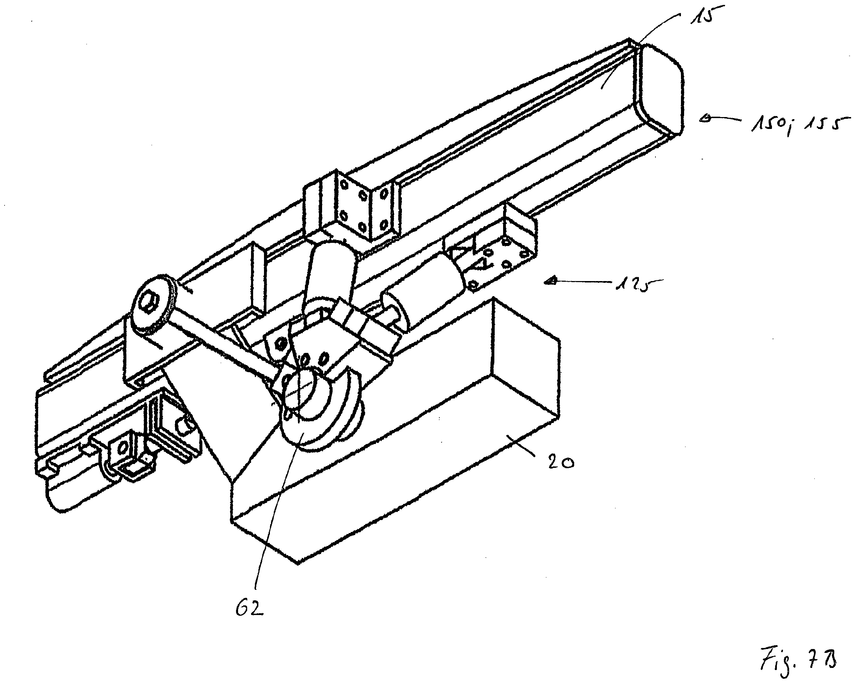

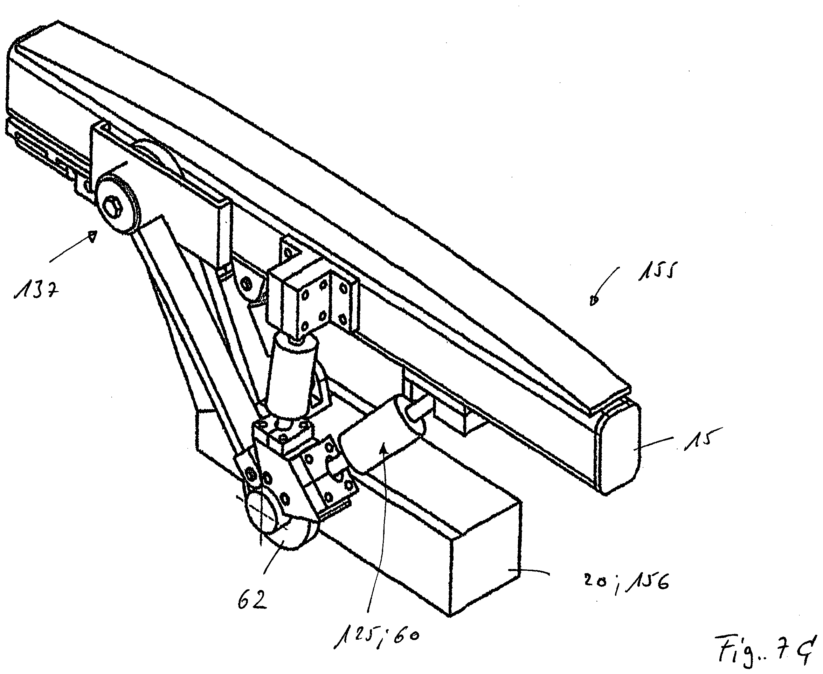

Bei der Variante des Fahrzeugsystems 101 gemäß den Figuren 7A bis 7E sind keine Führungen für den Längslenker 20 vorgesehen. Vielmehr ist an dem Längslenker 20 eine dritte Kolben-Zylinder-Einrichtung 125 mit einem Stoßdämpfer 60 angeordnet. Der Stoßdämpfer 60 ist mittels einer Halterung 61 mit einer Scheibe 62 befestigt, welche an dem Längslenker 20 angeordnet ist. In seitlicher Richtung wirkende Kräfte werden über den Längslenker 20 und den Stoßdämpfer 60 in den Durchlaufträger 15 übertragen. Sofern die Enden des Stoßdämpfers 60 kugelförmig gebildet sind, wären kugelförmige Aufnahmen an den Halterungen respektive Verschraubungen des Stoßdämpfers 60 zweckmäßig. Der Stoßdämpfer 60 kann sich so in mehreren Raumrichtungen bewegen.

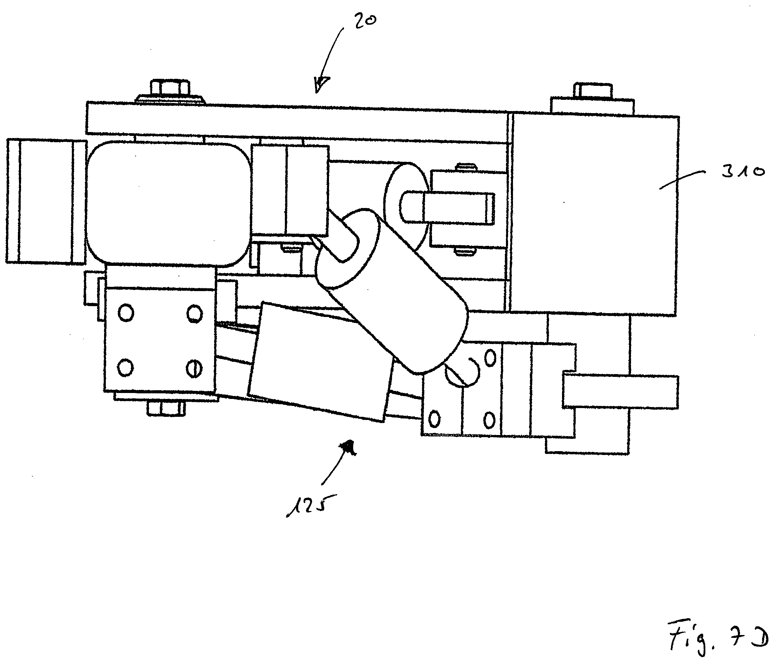

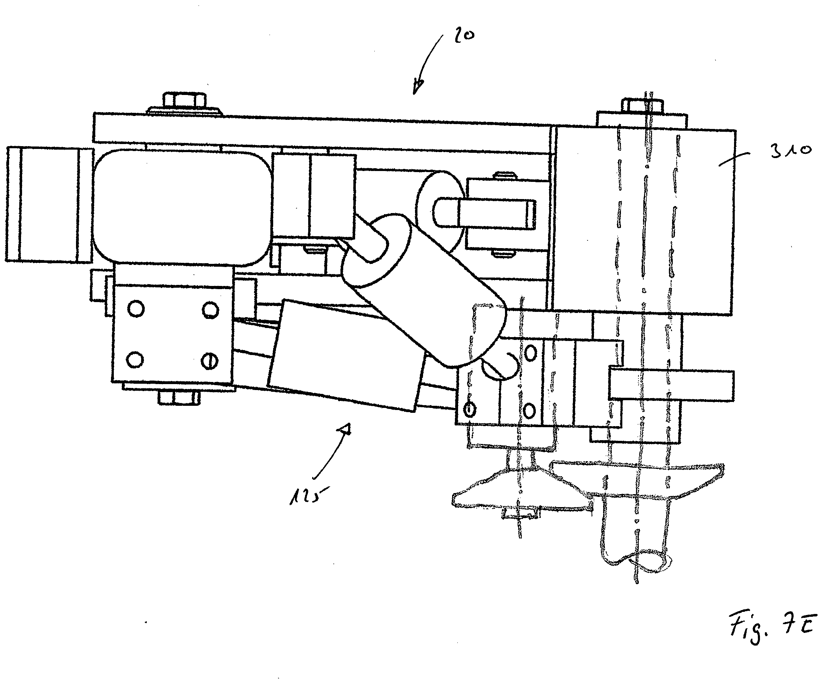

Wie in den Figuren 7D und 7E dargestellt, kann eine Antriebseinrichtung 310 vorgesehen sein, mit der etwa die Kolben-Zylinder-Einrichtung(en) antreibbar ist (sind). Gemäß der Darstellung in Fig. 7E kann die Antriebseinrichtung 310 ein mechanisches Getriebe umfassen.

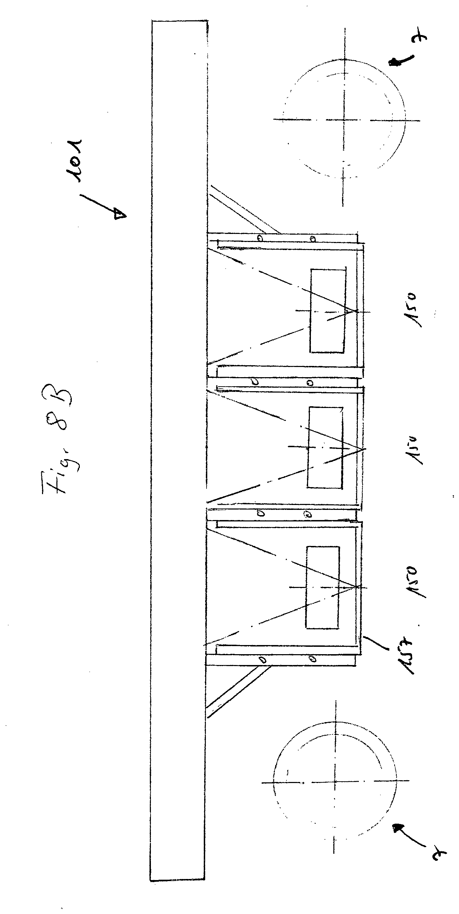

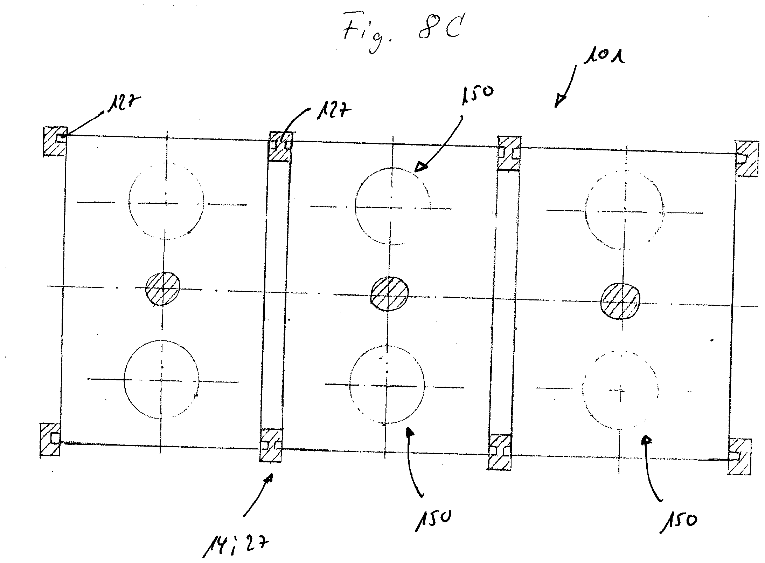

Der Figuren 8A - 8C können verschiedene Ansichten eines Fahrzeugsystems 101 in entnommen werden, bei dem mehrere Paare Straßenrad-Einzelaufhängungen 150 vorgesehen sind. Die Straßenrad-Einzelaufhängungen 150 können (bedarfsweise und insbesondere paarweise) separat heruntergeschwenkt werden. Der Fig. 8A kann eine seitliche Ansicht eines Fahrzeugsystems 101 entnommen werden, das mehrere Fahrwerke umfasst, wobei ein erstes Fahrwerk zwei Paare Straßenrad-Einzelaufhängungen 150 umfasst und ein zweites Fahrwerk ein Paar Straßenrad-Einzelaufhängungen 150. Der Fig. 8B kann entnommen werden, dass weitere Fahrwerke, insbesondere ein drittes Fahrwerk, ein viertes Fahrwerk und ein fünftes Fahrwerk, usw. vorgesehen sind. Eine Aufsicht auf ein Fahrzeugsystem 101 gemäß der Figuren 8A und 8B kann der Fig. 8C entnommen werden. Demnach umfasst jedes der mehreren Fahrwerke eine ersten Kolben-Zylinder-Einrichtung 113, mit der die Schwenkbewegung der Einzelradaufhängungen 150 durchführbar ist. Die Kolben-Zylinder-Einrichtungen 113 können über eine oder mehrere Steuer- und/oder Regeleinrichtungen Steuer- und/oder regelbar sein. Den Fig. 8A - 8C kann auch entnommen werden, dass die Fahrwerke über gemeinsame, insbesondere zwischen den Fahrwerken angeordnete, Führungen absenkbar respektive anhebbar sind.

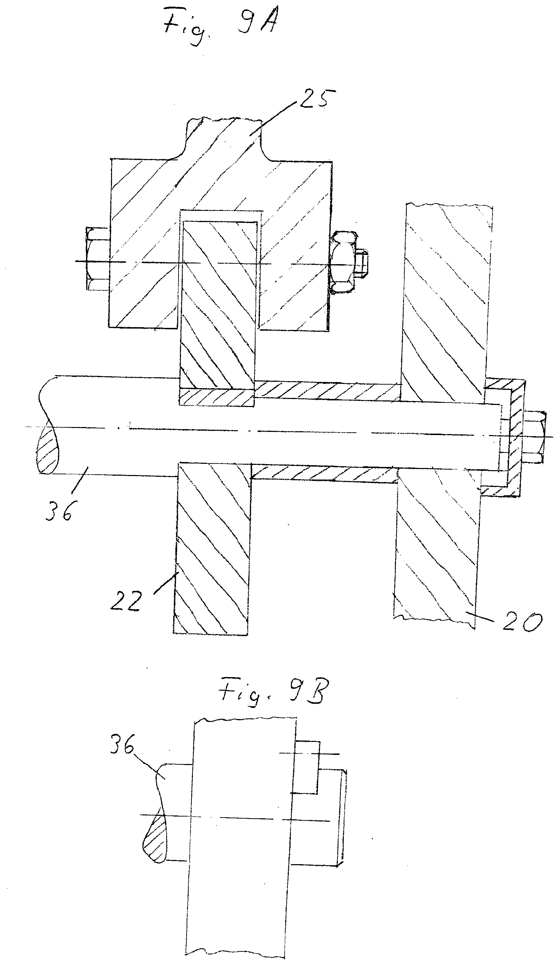

Den Figuren 9A und 9B können Detailansichten der Anordnung der Steckachsen an dem Längslenker 20 entnommen werden. Demnach ist auf der Steckachse eine Scheibe angeordnet, die mit dem Stoßdämpfer verbunden ist. Die Scheibe kann mittels einer Passfeder auf der Steckachse befestigt sein. Es kann aber auch eine formschlüssige oder stoffschlüssige Verbindung zwischen der Scheibe und der Steckachse vorgesehen sein. Gemäß Fig. 9B kann die Steckachse mit einer Bolzensicherung arretiert sein.

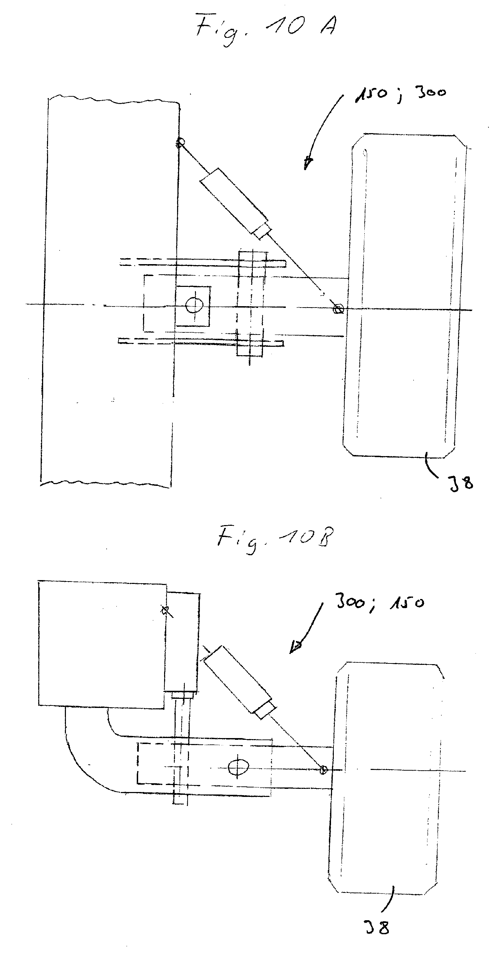

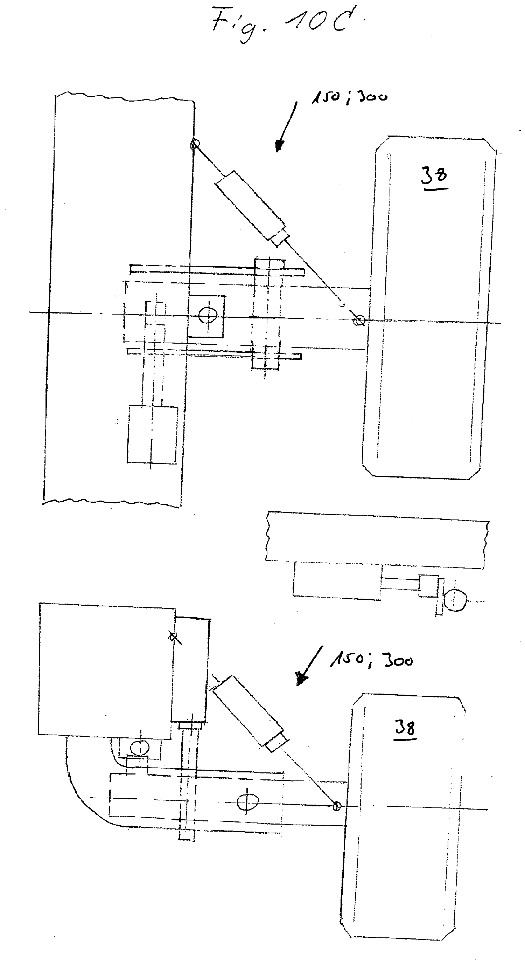

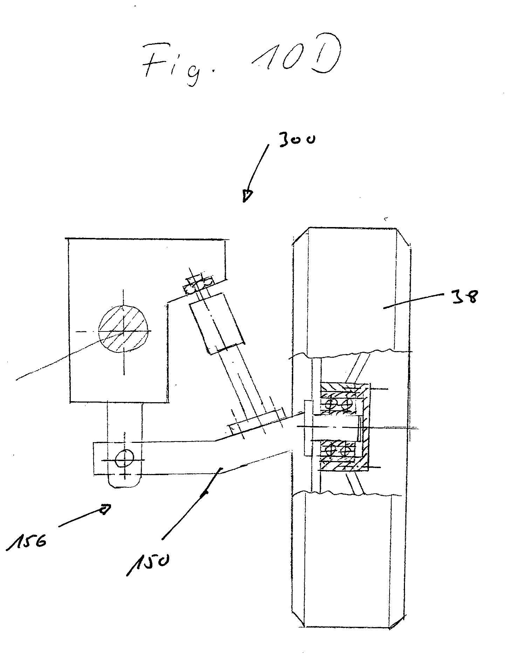

Den Figuren 10A - 10D können Varianten des Fahrzeugsystems 101 entnommen werden. Dargestellt sind jeweils Detailansichten der Radaufhängung und der Verriegelung der Straßenrad-Einzelaufhängung 150. Gemäß Fig. 10A und 10B ist eine Verriegelung mit einer Feder vorgesehen. Die Feder überträgt auf einen Bolzen eine Federkraft, wodurch der Bolzen bei entsprechender Stellung in eine Bolzenaufnahme einrastet. Der Fig. 10C kann ein, insbesondere ausfahrbarer, Endschalter entnommen werden, der beispielsweise einen, insbesondere ausfahrbaren, Endanschlag berührt, sobald die Einzelradaufhängung eine definierte (Betriebs-) Position erreicht hat. Es kann sich etwa um die Schienenbetriebsposition A handeln. Gemäß der Variante, die in Fig. 10D dargestellt ist, ist die Fahrwerksachse mit zumindest einer Federstütze verbunden. Die Anordnung gemäß Fig. 10D kann an dem Durchlaufträger 15 befestigt sein.

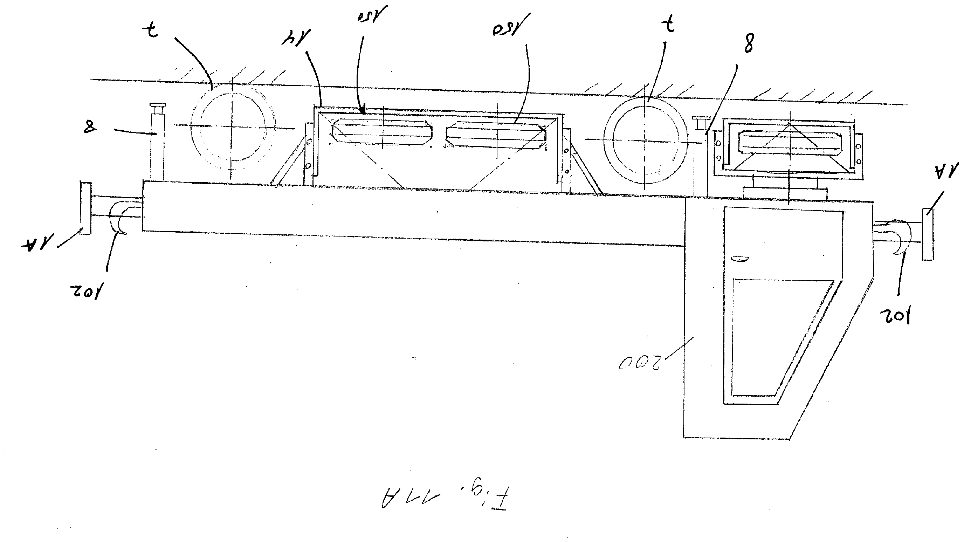

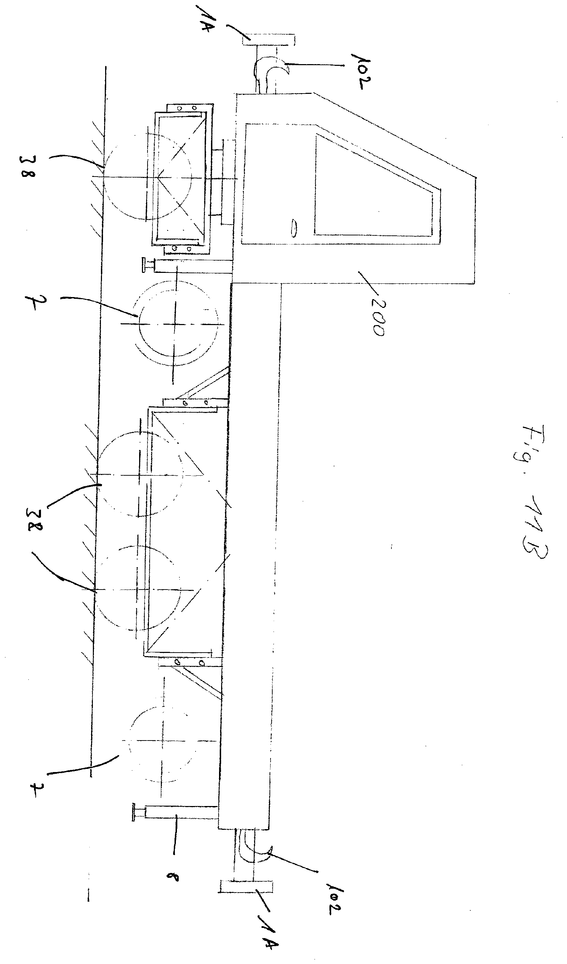

Eine alternative Ausgestaltung eines Fahrzeugsystems 101 kann der Figuren 11A und 11B entnommen werden. Demnach umfasst das Fahrzeugsystem 101 ein Führerhaus, etwa mit den Funktionen eines Führerhauses eines an sich bekannten Lastkraftwagens 200 (LKW). Unter dem Führerhaus ist eine Kupplungseinrichtung 2 vorgesehen, die ein Lager 2B umfasst, wobei das Lager 2B als Großwälzlager gebildet ist. Das hintere und/oder das vordere Fahrwerk des Fahrzeugsystems 101 gemäß der Figuren 11A und 11B kann dem oben beschriebenen Fahrwerk entsprechen oder zumindest Merkmale gemäß der oben beschriebenen Fahrwerke umfassen. Im Straßenbetrieb kann die Lenkbewegung über eine Lenkstange mit Hilfe eines Reib- oder Zahnradgetriebes, einer Zahnstange oder über ein hydraulisch geführtes Gestänge auf das Lager übertragen werden.

Gemäß der Figuren 11A und 11B sind mehrere Puffer 1A vorgesehen, die im vorderen und im hinteren Bereich des Fahrzeugsystems 101 angeordnet sind. Die Puffer 1A sind in dem Chassis respektive Rahmen 114 des Fahrzeugsystems 101 versenkbar. Das Versenken respektive das Hinein- und/oder Herausbewegen der Puffer aus der Versenkung kann hydraulisch assistiert erfolgen.

**BEZUGSZEICHENLISTE**

| | | | |
|---|---|---|---|
| 1 | Eisenbahnwagen | 26 | Luftfederung |
| 1A | Puffer | 27 | Führungsvorrichtung |
| 2 | Königszapfen | 28 | Steckachse |
| 2A | Deichsel | 29 | Verriegelungsblech |
| 2B | Lager | 30 | Kragarm |
| 3 | Halterung | 31 | Verriegelungsblech |
| 4 | Hebevorrichtung | 32 | Rundmaterial |
| 5 | Zylinder | 33 | Führungsblech |
| 6 | Arm | 34 | Kragarm |
| 6A | Halter | 35 | Kolbenstange |
| 7 | Schienenradsatz | 36 | Steckachse |
| 7A | Federpaket | 37 | Steckachse |
| 8 | Stützeinrichtung | 38 | Rad |
| 9 | Zylinder | 39 | Führungsbahn |
| 10 | Führungsvorrichtung | 40 | Führungsrolle |
| 11 | Verband | 41 | Befestigungsblech |
| 12 | Zylinder | 42 | Bolzen |
| 13 | Zylinder | 43 | Bolzenaufnahme |
| 14 | (biegesteifer) Rahmen | 44 | Bolzen |
| 15 | Durchlaufträger/ | 45 | Bolzen |
| | Durchlaufachse | 46 | Rundmaterial |
| 16 | Zylinder | 47 | Rechteckprofil |
| 17 | Klemmverbindung | 48 | Profilverstärkung |
| 18 | Kragarm | 49 | Rundmaterial |
| 19 | Lager (zweigeteilt) | 60 | Stoßdämpfer |
| 20 | Längslenker | 61 | Halterung |
| 21 | Längslenkerstab | 62 | Scheibe |
| 22 | Scheibe | 101 | Fahrzeugsystem |
| 24 | Stoßdämpfer | 102 | Kupplungseinrichtung |
| 25 | Stoßdämpfer | 105 | Zylinder |
| 107 | Achse | 156 | Übertragungsvorrichtung |
| 110 | Führungsstange | 157 | Tragelement |
| 113 | erste Kolben-Zylinder- | 160 | Fahrzeuglängsseite |
| | Einrichtung | 161 | Fahrzeugquerseite |
| 114 | (Fahrzeug-)Rahmen | 180 | Drehvorrichtung |
| 115 | Durchlaufachse | 181 | Drehachse |
| 116 | zweite Kolben-Zylinder- | 200 | LKW |
| | Einrichtung | 210 | Zugmaschine |
| 120 | Längslenker | 300 | Straßenfahrwerk |
| 125 | dritte Kolben-Zylinder- | 310 | Antriebseinrichtung |
| | Einrichtung | 400 | Schiene |
| 127 | Führungsmittel | | |
| 137 | Drehverbindung | A | Schienenbetriebsposition |
| 150 | Straßenrad-Einzelaufhängung | B | Straßenbetriebsposition |
| 155 | Trageinrichtung | | |

## Patentansprüche

1. Fahrzeugsystem (101) zum Transportieren von Gütern auf der Schiene (400) im Schienenbetrieb und auf der Straße im Straßenbetrieb,
mit einem einen Fahrzeugrahmen (114) aufweisenden Fahrzeugchassis, welches zumindest eine Fahrzeuglängsseite (160) und zumindest eine Fahrzeugquerseite (161) umfasst,
mit zumindest einem in und/oder unter dem Fahrzeugchassis angeordneten Fahrwerk, wobei das Fahrwerk zumindest zwei Schienenradsätze (7) und zumindest ein Straßenfahrwerk (300) umfasst, und
mit einer Stützeinrichtung (8) zum Anheben und/oder Stützen des Fahrzeugchassis,
**dadurch gekennzeichnet, dass** das Fahrwerk eine unter dem Fahrzeugrahmen (114) angeordnete, als unterspannte Träger gebildete und zumindest ein parallel zur Fahrzeugslängsachse verlaufendes Trageelement umfassende Trageinrichtung (155) zum Tragen von zumindest einem, bezogen auf die Fahrzeuglängsseite (160) des Fahrzeugsystems (101) gegenüberliegenden, Paar Straßenrad-Einzelaufhängungen (150) für den Straßenbetrieb umfasst, und dass jede Straßenrad-Einzelaufhängung (150) eine an der Trageinrichtung (155) angeordnete Drehvorrichtung (180) umfasst, mit der jede Straßenrad-Einzelaufhängung (150) um jeweils eine parallel zur Richtung der Fahrzeuglängsseite (160) des Fahrzeugsystems (101) verlaufende Aufhängungs-Drehachse (181) so drehbar ist, dass die Straßenrad-Einzelaufhängung (150) im Schienenbetrieb unter das Fahrzeugchassis schwenkbar ist, wobei die Trageinrichtung (155) höhenverstellbar und in zumindest zwei Positionen arretierbar ist, die Trageinrichtung (155) entlang einer zu der Richtung der Fahrzeuglängsseite (160) im Wesentlichen senkrecht verlaufenden Führungsvorrichtung (10) höhenverstellbar ist, wobei die Führungsvorrichtung (10), insbesondere vier, Führungsstangen (110) umfasst, die Trageinrichtung (155) einen biegesteifen Rahmen (14) umfasst, die Trageinrichtung (155) pro Straßenrad-Einzelaufhängung (150) oder pro Seite des Fahrzeugsystems (101) einen mittels einer ersten Kolben-Zylinder-Einrichtung (113) drehbaren Durchlaufträger (15) umfasst, der über eine Verriegelungseinrichtung in einer Straßenbetriebsposition (B) und/oder in einer Schienenbetriebsposition (A) arretierbar ist, und der in einem oder mehreren an der Trageinrichtung (155) angeordneten Kragarmen drehbeweglich gelagert ist, und wobei die Verriegelungseinrichtung zum Verriegeln des Durchlaufträgers (15) Bolzen umfasst, die über eine zweite Kolben-Zylinder-Einrichtung (116) betätigbar sind.

2. Fahrzeugsystem (101) nach Anspruch 1, **dadurch gekennzeichnet, dass** jede Straßenrad-Einzelaufhängung (150) eine Übertragungsvorrichtung (156) zum Übertragen von Kräften, insbesondere Längskräften, und/oder Momenten, insbesondere Reaktionsmomenten, von dem Straßenrad auf die Trageinrichtung (155) umfasst.

3. Fahrzeugsystem (101) nach Anspruch 2, **dadurch gekennzeichnet, dass** die Übertragungsvorrichtung (156) einen Längslenker (120) umfasst, der über eine Drehverbindung (137) an der Trageinrichtung (155) so angeordnet ist, dass der Längslenker (120) um eine Drehachse auslenkbar ist, die parallel zur Fahrzeugquerseite (161) verläuft.

4. Fahrzeugsystem (101) nach Anspruch 2 oder 3, **dadurch gekennzeichnet, dass** die Übertragungsvorrichtung (156) eine oder mehrere dritte Kolben-Zylinder-Einrichtungen (125) umfasst.

5. Fahrzeugsystem (101) nach einem der Ansprüche 1 bis 4, **gekennzeichnet durch** Führungsmittel (127) zum geführten Bewegen der Übertragungsvorrichtung (156) an der Trageinrichtung (155).

6. Fahrzeugsystem (101) nach einem der Ansprüche 1 bis 5, **dadurch gekennzeichnet, dass** das Fahrwerk eine unter dem Fahrzeugrahmen (114) angeordnete Trageinrichtung (155) zum Tragen eines Straßenfahrwerks (300) für den Straßenbetrieb umfasst, und dass die Trageinrichtung (155) zumindest ein zur Richtung entlang der Fahrzeuglängsseite (160) im Wesentlichen parallel verlaufendes Tragelement (157) umfasst, welches in der Trageinrichtung (155) so anordbar ist, dass ein, insbesondere durch Güter, verursachtes und auf die Trageinrichtung (155) übertragenes Biegemoment keine oder zumindest kaum eine Lageveränderung des Tragelementes (157) bewirkt.

7. Fahrzeugsystem (101) nach Anspruch 6, **dadurch gekennzeichnet, dass** das Tragelement (157) Befestigungseinrichtungen umfasst, die in einer oder mehreren Führungs- und/oder Halteeinrichtungen der Trageinrichtung (155) anordbar sind, und dass die Führungs- und/oder Halteeinrichtungen einer Führungsvorrichtung der Trageinrichtung (155) zugeordnet sind.

8. Fahrzeugsystem (101) nach einem der Ansprüche 1 bis 7, **gekennzeichnet durch** zumindest eine Kupplungseinrichtung (102) zum Ankuppeln des Fahrzeugsystems (101) an ein Zugfahrzeug (210) und/oder an ein an einem Zugfahrzeug angekuppeltes Transportfahrzeug.

9. Fahrzeugsystem (101) nach Anspruch 8, **dadurch gekennzeichnet, dass** die Kupplungseinrichtung (102) einen Königszapfen (2) und/oder eine Deichsel (2A) und/oder zumindest eine Schienenfahrzeugkupplung und/oder zumindest einen Puffer (1A) und/oder ein Lager (2B), insbesondere ein Wälzlager und/oder einen Lenkkranz, umfasst.

10. Fahrzeugsystem (101) nach einem der Ansprüche 1 bis 9, **dadurch gekennzeichnet, dass** der Schienenradsatz (7) aus seiner Schienenbetriebsposition (A) anhebbar und/oder außerhalb der Schienenbetriebsposition (A) arretierbar ist.

11. Fahrzeugsystem (101) nach einem der Ansprüche 1 bis 10, **gekennzeichnet durch** zumindest eine Antriebseinrichtung (310), die zumindest einer Stra-βenrad-Einzelaufhängung (150) und/oder einem Schienenradsatz (7) zugeordnet ist, mit der das Straßenrad (38) der Straßenrad-Einzelaufhängung (150) und/oder die Schienenräder des Schienenradsatzes (7), insbesondere zum Rangieren, antreibbar sind, wobei die Antriebseinrichtung (310) bevorzugt einen Antriebsmotor und/oder ein mechanisches Antriebsgetriebe umfasst.

12. Umrüstsatz zum Umrüsten eines Eisenbahnwagens (1) zu einem Fahrzeugsystem (101) zum Transportieren von Gütern auf der Schiene (400) im Schienenbetrieb und auf der Straße im Straßenbetrieb, insbesondere zu einem Fahrzeugsystem (101) nach einem der Ansprüche 1 bis 11,
wobei der Eisenbahnwagen (1) ein einen Fahrzeugrahmen (114) aufweisendes Fahrzeugchassis umfasst, welches zumindest eine Fahrzeuglängsseite (160) und zumindest eine Fahrzeugquerseite (161) aufweist, und
wobei in und/oder unter dem Fahrzeugchassis ein Fahrwerk angeordnet ist, welches zumindest zwei Schienenradsätze (7) umfasst,
**dadurch gekennzeichnet,**
**dass** der Umrüstsatz eine, insbesondere unter dem Fahrzeugrahmen (114) anordbare, Trageinrichtung (155) umfasst, an der zumindest ein, bezogen auf die Fahrzeuglängsseite (160) des Eisenbahnwagens (1) gegenüberliegendes Paar Straßenrad-Einzelaufhängungen (150) für den Straßenbetrieb angeordnet sind,
wobei jede Straßenrad-Einzelaufhängung (150) eine an der Trageinrichtung (155) angeordnete Drehvorrichtung (180) umfasst, mit der jede Straßenrad-Einzelaufhängung (150) um jeweils eine parallel zur Richtung der Fahrzeuglängsseite (160) des Fahrzeugsystems (101) verlaufende Radaufhängungs-Drehachse so drehbar ist, dass die Straßenrad-Einzelaufhängung (150) im Schienenbetrieb unter das Fahrzeugchassis schwenkbar ist, und
**dass** der Umrüstsatz eine Stützeinrichtung (8) zum Anheben und/oder Stützen des Fahrzeugchassis umfasst, wobei die Trageinrichtung (155) einen unterspannbaren Träger umfasst, welcher unter dem Fahrzeugrahmen (114) anordbar ist, die Abmessungen vorgegeben sind, die das Lichtraummaß des mit dem Umrüstsatz ausgestatteten Eisenbahnwagens (1) nicht beeinflusst, und wobei die Trageinrichtung (155) einen biegesteifen Rahmen (14) umfasst, die Trageinrichtung (155) pro Straßenrad-Einzelaufhängung (150) oder pro Seite des Fahrzeugsystems (101) einen mittels einer ersten Kolben-Zylinder-Einrichtung (113) drehbaren Durchlaufträger (15) umfasst, der über eine Verriegelungseinrichtung in einer Straßenbetriebsposition (B) und/oder in einer Schienenbetriebsposition (A) arretierbar ist, und der in einem oder mehreren an der Trageinrichtung (155) angeordneten Kragarmen drehbeweglich gelagert ist und wobei die Verriegelungseinrichtung zum Verriegeln des Durchlaufträgers (15) Bolzen umfasst, die über eine zweite Kolben-Zylinder-Einrichtung (116) betätigbar sind.

13. Verfahren zum Umrüsten eines Eisenbahnwagens (1) zu einem Fahrzeugsystem (101) zum Transportieren von Gütern auf der Schiene (400) im Schienenbetrieb und auf der Straße im Straßenbetrieb nach einem der Ansprüche 1 bis 11,
wobei der Eisenbahnwagen (1) ein einen Fahrzeugrahmen (114) aufweisendes Fahrzeugchassis umfasst, welches zumindest eine Fahrzeuglängsseite (160) und zumindest eine Fahrzeugquerseite (161) aufweist, und
wobei in und/oder unter dem Fahrzeugchassis ein Fahrwerk angeordnet ist, welches zumindest zwei Schienenradsätze (7) umfasst, **dadurch gekennzeichnet,**
**dass** das Fahrzeugchassis des Eisenbahnwagens (1) mittels einer Stützeinrichtung (8) zum Anheben und/oder Stützen des Fahrzeugchassis angehoben wird,
**dass** zumindest ein Schienenradsatz (7) aus der Position (A) für den Schienenbetrieb in eine Position (B) für den Straßenbetrieb angehoben wird,
**dass** Straßenrad-Einzelaufhängungen (150) aus einer Position (A) für den Schienenbetrieb mittels einer an einer Trageinrichtung (155) angeordneten Drehvorrichtung (180) um parallel zur Richtung der Fahrzeuglängsseite (160) des Eisenbahnwagens (1) verlaufenden Radaufhängungs-Drehachsen in eine Straßenbetriebsposition (B) geschwenkt werden,
eine Verriegelungseinrichtung zum Verriegeln des Durchlaufträgers (15) betätigt wird,
**dass** eine Kupplungseinrichtung (102) zum Ankuppeln des Eisenbahnwagens (1) an ein Zugfahrzeug (210) betätigt wird, und
**dass** das Fahrzeugchassis des Eisenbahnwagens (1) mittels der Stützeinrichtung (8) zum Anheben und/oder Stützen des Fahrzeugchassis abgesenkt wird.

14. Verfahren zum Umrüsten eines Fahrzeugsystems (101) zum Transportieren von Gütern auf der Schiene (400) im Schienenbetrieb und auf der Straße im Straßenbetrieb zu einem Eisenbahnwagen (1) nach einem der Ansprüche 1 bis 11,
wobei das Fahrzeugsystem (101) ein einen Fahrzeugrahmen (114) aufweisendes Fahrzeugchassis umfasst, welches zumindest eine Fahrzeuglängsseite (160) und zumindest eine Fahrzeugquerseite (161) aufweist, und
wobei in und/oder unter dem Fahrzeugchassis ein Fahrwerk angeordnet ist, welches zumindest zwei Schienenradsätze (7) umfasst,
**dadurch gekennzeichnet,**
**dass** das Fahrzeugchassis des Fahrzeugsystems (101) mittels einer Stützeinrichtung (8) zum Anheben und/oder Stützen des Fahrzeugchassis angehoben wird,
**dass** eine Kupplungseinrichtung (102) zum Abkuppeln des Fahrzeugsystems (101) von einem Zugfahrzeug (210) betätigt wird,
eine Verriegelungseinrichtung zum Verriegeln des Durchlaufträgers (15) betätigt wird,
**dass** Straßenrad-Einzelaufhängungen (150) aus einer Straßenbetriebsposition (B) mittels einer an einer Trageinrichtung (155) angeordneten Drehvorrichtung um parallel zur Richtung der Fahrzeuglängsseite (160) des Eisenbahnwagens (1) verlaufenden Radaufhängungs-Drehachsen in eine Schienenbetriebsposition (A) geschwenkt werden,
**dass** zumindest ein Schienenradsatz (7) aus der Position (B) für den Stra-βenbetrieb in eine Schienenbetriebsposition (A) abgesenkt wird, und
**dass** das Fahrzeugchassis des Eisenbahnwagens (1) mittels der Stützeinrichtung (8) zum Anheben und/oder Stützen des Fahrzeugchassis abgesenkt wird.

## Claims

1. Vehicle system (101) for transporting goods by rail (400) in railway operation and by road in road operation,
having a vehicle chassis having a vehicle frame (114), which vehicle chassis comprises at least one longitudinal vehicle side (160) and at least one transverse vehicle side (161),
having at least one undercarriage arranged in and/or below the vehicle chassis, wherein the undercarriage comprises at least two rail wheel sets (7) and at least one road undercarriage (300), and
having a support device (8) for lifting and/or supporting the vehicle chassis,
**characterized in that** the undercarriage comprises a carrying device (155) arranged below the vehicle frame (114), formed as an underslung carrier and comprising at least one carrier element extending parallel to the
longitudinal vehicle axis, which carrying device (155) is for carrying at least one pair of road wheel independent suspensions (150) for road operation, which pair is opposite with respect to the longitudinal vehicle side (160) of the vehicle system (101), and **in that** each road wheel independent suspension (150) comprises a rotating device (180) arranged on the carrying device (155), with which each road wheel independent suspension (150) can be rotated about a respective suspension axis of rotation (181) running parallel to the direction of the longitudinal vehicle side (160) of the vehicle system (101) in such a manner that the road wheel independent suspension (150) can be pivoted under the vehicle chassis in railway operation, wherein the carrying device (155) can be adjusted in height and can be locked in at least two positions, the carrying device (155) being adjustable in height along a guide device (10) extending substantially perpendicular to the direction of the longitudinal vehicle side (160), wherein the guide device (10) comprises in particular four guide rods (110), the carrying device (155) comprising a rigid frame (14), the carrying device (155) comprising per road wheel independent suspension (150) or per side of the vehicle system (101) a continuous carrier (15) rotatable by means of a first piston cylinder device (113), which continuous carrier (15) can be locked in a road operation position (B) and/or in a railway operation position (A) via a locking device, and which is rotatably mounted in one or several cantilever arms arranged on the carrying device (155), and wherein the locking device for locking the continuous carrier (15) comprises pins, which can be actuated via a second piston cylinder device (116).

2. Vehicle system (101) according to Claim 1, **characterized in that** each road wheel independent suspension (150) comprises a transfer device (156) for transferring forces, in particular longitudinal forces, and/or torques, in particular reaction torques, from the road wheel to the carrying device (155).

3. Vehicle system (101) according to Claim 2, **characterized in that** the transfer device (156) comprises a trailing arm (120), which is arranged on the carrying device (155) via a rotary connection (137) in such a manner that the trailing arm (120) can be deflected about an axis of rotation which extends parallel to the transverse vehicle side (161).

4. Vehicle system (101) according to Claim 2 or 3, **characterized in that** the transfer device (156) comprises one or more third piston cylinder devices (125) .

5. Vehicle system (101) according to one of Claims 1 to 4, **characterized by** guide means (127) for the guided movement of the transfer device (156) on the carrying device (155).

6. Vehicle system (101) according to one of Claims 1 to 5, **characterized in that** the undercarriage comprises a carrying device (155) arranged below the vehicle frame (114) for carrying a road undercarriage (300) for road operation, and **in that** the carrying device (155) comprises at least one support element (157) extending substantially parallel to the direction along the longitudinal vehicle side (160), which support element (157) can be arranged in the carrying device (155) in such a manner that a bending moment caused in particular by goods and transferred to the carrying device (155) causes no or at least hardly any change in position of the support element (157).

7. Vehicle system (101) according to Claim 6, **characterized in that** the support element (157) comprises fastening devices, which can be arranged in one or more guide means and/or holding devices or the carrying device (155), and **in that** the guide means and/or holding devices are assigned to a guide device of the carrying device (155).

8. Vehicle system (101) according to one of Claims 1 to 7, **characterized by** at least one coupling device (102) for coupling the vehicle system (101) to a towing vehicle (210) and/or to a transport vehicle coupled to a towing vehicle.

9. Vehicle system (101) according to Claim 8, **characterized in that** the coupling device (102) comprises a kingpin (2) and/or a drawbar (2A) and/or at least one railway vehicle coupling and/or at least one buffer (1A) and/or one bearing (2B), in particular a rolling bearing and/or a steering rim.

10. Vehicle system (101) according to one of Claims 1 to 9, **characterized in that** the rail wheel set (7) can be lifted from its railway operation position (A) and/or can be locked outside the railway operation position (A) .

11. Vehicle system (101) according to one of Claims 1 to 10, **characterized by** at least one drive device (310), which is assigned to at least one road wheel independent suspension (150) and/or one rail wheel set (7), with which the road wheel (38) of the road wheel independent suspension (150) and/or the rail wheels of the rail wheel set (7) can be driven, in particular for manoeuvring, wherein the drive device (310) preferably comprises a drive motor and/or a mechanical drive gear.

12. Conversion kit for converting a railway carriage (1) into a vehicle system (101) for transporting goods by rail (400) in .railway operation and by road in road operation, in particular into a vehicle system (101) according to one of Claims 1 to 11,
wherein the railway carriage (1) comprises a vehicle chassis having a vehicle frame (114), which vehicle chassis has at least one longitudinal vehicle side (160) and at least one transverse vehicle side (161), and
wherein an undercarriage is arranged in and/or below the vehicle chassis, which undercarriage comprises at least two rail wheel sets (7),
**characterized in that**
the conversion kit comprises a carrying device (155), which can in particular be arranged below the vehicle frame (114), on which at least one pair of road wheel independent suspensions (150) for road operation are arranged, which pair is opposite with respect to the longitudinal vehicle side (160) of the railway carriage (1),
wherein each road wheel independent suspension (150) comprises a rotating device (180) arranged on the carrying device (155), with which each road wheel independent suspension (150) can be rotated about a respective wheel suspension axis of rotation running parallel to the direction of the longitudinal vehicle side (160) of the vehicle system (101) in such a manner that the road wheel independent suspension (150) can be pivoted under the vehicle chassis in railway operation, and
**in that** the conversion set comprises a support device (8) for lifting and/or supporting the vehicle chassis, wherein the carrying device (155) comprises a carrier that can be underslung, which can be arranged below the vehicle frame (114), the dimensions being predetermined, which does not affect the loading gauge of the railway carriage (1) equipped with the conversion kit, and wherein the carrying device (155) comprises a rigid frame (14), the carrying device (155) comprising per road wheel independent suspension (150) or per side of the vehicle system (101) a continuous carrier (15) rotatable by means of a first piston cylinder device (113), which continuous carrier (15) can be locked in a road operation position (B) and/or in a railway operation position (A) via a locking device, and which is rotatably mounted in one or several cantilever arms arranged on the carrying device (155), and wherein the locking device for locking the continuous carrier (15) comprises pins, which can be actuated via a second piston cylinder device (116).

13. Method for converting a railway carriage (1) into a vehicle system (101) for transporting goods by rail (400) in railway operation and by road in road operation according to one of Claims 1 to 11,
wherein the railway carriage (1) comprises a vehicle chassis having a vehicle frame (114), which vehicle chassis has at least one longitudinal vehicle side (160) and at least one transverse vehicle side (161), and
wherein an undercarriage is arranged in and/or below the vehicle chassis, which undercarriage comprises at least two rail wheel sets (7),
**characterized in that**
the vehicle chassis of the railway carriage (1) is lifted by means of a support device (8) for lifting and/or supporting the vehicle chassis,
**in that** at least one rail wheel set (7) is lifted from the position (A) for railway operation into a position (B) for road operation,
**in that** road wheel independent suspensions (150) are pivoted out of a position (A) for railway operation into a road operation position (B) by means of a rotating device (180) arranged on a carrying device (155) about wheel suspension axes of rotation extending parallel to the direction of the longitudinal vehicle side (160) of the railway carriage (1),
a locking device for locking the continuous carrier (15) is actuated,
**in that** a coupling device (102) for coupling the railway carriage (1) to a towing vehicle (210) is actuated, and
**in that** the vehicle chassis of the railway carriage (1) is lowered by means of the support device (8) for lifting and/or supporting the vehicle chassis.

14. Method for converting a vehicle system (101) for transporting goods by rail (400) in railway operation and by road in road operation into a railway carriage (1) according to one of Claims 1 to 11,
wherein the vehicle system (101) comprises a vehicle chassis having a vehicle frame (114), which vehicle chassis has at least one longitudinal vehicle side (160) and at least one transverse vehicle side (161), and
wherein an undercarriage is arranged in and/or below the vehicle chassis, which undercarriage comprises at least two rail wheel sets (7),
**characterized in that**
the vehicle chassis of the vehicle system (101) is lifted by means of a support device (8) for lifting and/or supporting the vehicle chassis,
**in that** a coupling device (102) for uncoupling the vehicle system (101) from a towing vehicle (210) is actuated,
a locking device for locking the continuous carrier (15) is actuated,
**in that** road wheel independent suspensions (150) are pivoted out of a road operation position (B) into a railway operation position (A) by means of a rotating device arranged on a carrying device (155) about wheel suspension axes of rotation extending parallel to the direction of the longitudinal vehicle side (160) of the railway carriage (1),
**in that** at least one rail wheel set (7) is lowered from the position (B) for road operation into a railway operation position (A), and
**in that** the vehicle chassis of the railway carriage (1) is lowered by means of the support device (8) for lifting and/or supporting the vehicle chassis.

## Revendications

1. Système de véhicule (101) pour le transport de marchandises sur les rails (400) en fonctionnement sur rails et sur route en fonctionnement sur route,
comprenant un châssis de véhicule présentant un cadre de véhicule (114), lequel comprend au moins un côté longitudinal de véhicule (160) et au moins un côté transversal de véhicule (161),
comprenant au moins un mécanisme de roulement disposé dans et/ou sous le châssis de véhicule, dans lequel le mécanisme de roulement comprend au moins deux jeux de roues sur rails (7) et au moins un mécanisme de roulement pour route (300), et
comprenant un dispositif d'appui (8) pour soulever et/ou appuyer le châssis de véhicule,
**caractérisé en ce que** le mécanisme de roulement comprend un dispositif porteur (155) disposé sous le cadre de véhicule (114), formé en tant que support en sous-tension et comprenant au moins un élément porteur parallèle à l'axe longitudinal de véhicule, pour supporter au moins une paire de suspensions individuelles de roues pour route (150) pour le fonctionnement sur route, opposée par rapport au côté longitudinal de véhicule (160) du système de véhicule (101), et que chaque suspension individuelle de roue pour route (150) comprend un dispositif rotatif (180) disposé sur le dispositif porteur (155) avec lequel chaque suspension individuelle de roue pour route (150) peut ainsi tourner sur un pivot de suspension de roue (181) parallèle au sens du côté longitudinal de véhicule (160) du système de véhicule (101), que la suspension individuelle de roue pour route (150) peut basculer sous le châssis de véhicule en fonctionnement sur rails, dans lequel le dispositif porteur (155) est réglable en hauteur et peut être bloqué dans au moins deux positions, le dispositif porteur (155) est réglable en hauteur le long d'un dispositif directionnel (10) essentiellement perpendiculaire au sens du côté longitudinal de véhicule (160), dans lequel le dispositif directionnel (10) comprend des barres conductrices (110), en particulier quatre, le dispositif porteur (155) comprend un cadre (14) résistant à la flexion, le dispositif porteur (155) comprend un support continu (15) par suspension individuelle de roue pour route (150) ou par côté du système de véhicule (101) pouvant être tourné au moyen d'un premier ensemble piston-cylindre (113), qui peut être bloqué dans une position de fonctionnement sur route (B) et/ou une position de fonctionnement sur rails (A) par un dispositif de verrouillage, et qui est disposé mobile en rotation dans un ou plusieurs bras en porte-à-faux disposé(s) sur le dispositif porteur (155), et dans lequel le dispositif de verrouillage comprend des boulons pour verrouiller le support continu (15), qui peuvent être actionnés par un deuxième ensemble piston-cylindre (116).

2. Système de véhicule (101) selon la revendication 1, **caractérisé en ce que** chaque suspension individuelle de roue pour route (150) comprend un dispositif de transmission (156) pour transmettre des forces, en particulier des forces longitudinales et/ou des moments, en particulier des moments de réaction, de la roue pour route au dispositif porteur (155).

3. Système de véhicule (101) selon la revendication 2, **caractérisé en ce que** le dispositif de transmission (156) comprend un guidon longitudinal (120) qui est ainsi disposé sur le dispositif porteur (155) par le biais d'une liaison rotative (137) que le guidon longitudinal (120) peut être dévié sur un pivot qui est parallèle au côté transversal du véhicule (161).

4. Système de véhicule (101) selon la revendication 2 ou 3, **caractérisé en ce que** le dispositif de transmission (156) comprend un ou plusieurs troisièmes ensembles piston-cylindre (125).

5. Système de véhicule (101) selon l'une des revendications 1 à 4, **caractérisé par** des moyens de guidage (127) pour le mouvement guidé du dispositif de transmission (156) sur le dispositif porteur (155).

6. Système de véhicule (101) selon l'une des revendications 1 à 5, **caractérisé en ce que** le mécanisme de roulement comprend un dispositif porteur (155) disposé sous le cadre de véhicule (114) pour supporter un mécanisme de roulement pour route (300) pour le fonctionnement sur route, et que le dispositif porteur (155) comprend au moins un élément porteur (157) essentiellement parallèle au sens le long du côté longitudinal de véhicule (160), lequel peut être agencé de telle façon dans le dispositif porteur (155) qu'un moment de flexion provoqué en particulier par des marchandises et transmis au dispositif porteur (155) n'a pour effet aucune ou presque pas de modification de position de l'élément porteur (157).

7. Système de véhicule (101) selon la revendication 6, **caractérisé en ce que** l'élément porteur (157) comprend des ensembles de fixation qui peuvent être agencés dans un ou plusieurs ensemble(s) de guidage et/ou de maintien du dispositif porteur (155), et que les ensembles de guidage et/ou de maintien sont attribués à un dispositif de guidage du dispositif porteur (155) .

8. Système de véhicule (101) selon l'une des revendications 1 à 7, **caractérisé par** au moins un ensemble de couplage (102) pour coupler le système de véhicule (101) à un véhicule tracteur (210) et/ou à un véhicule de transport couplé à un véhicule tracteur.

9. Système de véhicule (101) selon la revendication 8, **caractérisé en ce que** l'ensemble de couplage (102) comprend une barre d'attelage (2) et/ou un timon (2A) et/ou au moins un couplage de véhicule ferroviaire et/ou au moins un butoir (1A) et/ou un palier (2B), en particulier un palier à rouleaux et/ou une couronne de direction.

10. Système de véhicule (101) selon l'une des revendications 1 à 9, **caractérisé en ce que** le jeu de roues sur rails (7) peut être soulevé de sa position de fonctionnement sur rails (A) et/ou bloqué hors de la position de fonctionnement sur rails (A).

11. Système de véhicule (101) selon l'une des revendications 1 à 10, **caractérisé en ce qu'**au moins un ensemble d'entraînement (310) qui est attribué à au moins une suspension individuelle de roue pour route (150) et/ou un jeu de roues sur rails (7), avec lequel la roue pour route (38) de la suspension individuelle de roue pour route (150) et/ou les roues pour rail du jeu de roues sur rails (7) peuvent être entraînées, en particulier pour les manœuvres, dans lequel l'ensemble d'entraînement (310) comprend de préférence un moteur d'entraînement et/ou un engrenage d'entraînement mécanique.

12. Jeu de transformation pour transformer un véhicule ferroviaire (1) en un système ferroviaire (101) pour le transport de marchandises sur les rails (400) en fonctionnement sur rails et sur route en fonctionnement sur route, en particulier en un système de véhicule (101) selon l'une des revendications 1 à 11,
dans lequel le véhicule ferroviaire (1) comprend un châssis de véhicule présentant un cadre de véhicule (114), lequel comprend au moins un côté longitudinal de véhicule (160) et au moins un côté transversal de véhicule (161),
dans lequel un mécanisme de roulement est disposé dans et/ou sous le châssis de véhicule, lequel comprend au moins deux jeux de roues sur rails (7),
**caractérisé en ce que**
le jeu de transformation comprend un dispositif porteur (155) pouvant être disposé sous le cadre de véhicule (114), sur lequel au moins une paire de suspensions individuelles de roues pour route (150), opposée par rapport au côté longitudinal de véhicule (160) du véhicule ferroviaire (1), est disposée pour le fonctionnement sur route,
dans lequel chaque suspension individuelle de roue pour route (150) comprend un dispositif rotatif (180) disposé sur le dispositif porteur (155) avec lequel chaque suspension individuelle de roue pour route (150) peut ainsi tourner sur un pivot de suspension de roue parallèle au sens du côté longitudinal de véhicule (160) du système de véhicule (101) que la suspension individuelle de roue pour route (150) peut basculer sous le châssis de véhicule en fonctionnement sur rails,
et
que le jeu de transformation comprend un dispositif d'appui (8) pour soulever et/ou appuyer le châssis de véhicule, dans lequel le dispositif porteur (155) comprend un support en sous-tension qui peut être agencé sous le cadre de véhicule (114), les dimensions sont définies, qui n'influence pas les dimensions de gabarit du véhicule ferroviaire (1) doté du jeu de transformation, et dans lequel le dispositif porteur (155) comprend un cadre (14) résistant à la flexion, le dispositif porteur (155) comprend un support continu (15) par suspension individuelle de roue pour route (150) ou par côté du système de véhicule (101) pouvant être tourné au moyen d'un premier ensemble piston-cylindre (113), qui peut être bloqué dans une position de fonctionnement sur route (B) et/ou une position de fonctionnement sur rails (A) par un dispositif de verrouillage, et qui est disposé mobile en rotation dans un ou plusieurs bras en porte-à-faux disposé(s) sur le dispositif porteur (155), et dans lequel le dispositif de verrouillage comprend des boulons pour verrouiller le support continu (15), qui peuvent être actionnés par un deuxième ensemble piston-cylindre (116).

13. Procédé de transformation d'un véhicule ferroviaire (1) en un système ferroviaire (101) pour le transport de marchandises sur les rails (400) en fonctionnement sur rails et sur route en fonctionnement sur route, selon l'une des revendications 1 à 11,
dans lequel le véhicule ferroviaire (1) comprend un châssis de véhicule présentant un cadre de véhicule (114), lequel comprend au moins un côté longitudinal de véhicule (160) et au moins un côté transversal de véhicule (161),
dans lequel un mécanisme de roulement est disposé dans et/ou sous le châssis de véhicule, lequel comprend au moins deux jeux de roues sur rails (7),
**caractérisé en ce que**
le châssis de véhicule du véhicule ferroviaire (1) est soulevé au moyen d'un dispositif d'appui (8) pour soulever et/ou appuyer le châssis de véhicule,
qu'au moins un jeu de roues sur rails (7) est soulevé de la position (A) pour le fonctionnement sur rails à une position (B) pour le fonctionnement sur route,
que des suspensions individuelles de roues pour route (150) peuvent être basculées d'une position (A) pour le fonctionnement sur rails à une position (B) pour le fonctionnement sur route au moyen d'un dispositif rotatif (180) disposé sur un dispositif porteur (155), sur des pivots de suspension de roue parallèles au sens du côté longitudinal de véhicule (160) du véhicule ferroviaire (1),
un dispositif de verrouillage est actionné pour verrouiller le support continu (15),
qu'un ensemble de couplage (102) est actionné pour coupler le véhicule ferroviaire (1) à un véhicule tracteur (210), et
que le châssis de véhicule du véhicule ferroviaire (1) est abaissé au moyen du dispositif d'appui (8) pour soulever et/ou appuyer le châssis de véhicule.

14. Procédé de transformation d'un système de véhicule (101) en un véhicule ferroviaire (1) pour le transport de marchandises sur les rails (400) en fonctionnement sur rails et sur route en fonctionnement sur route, selon l'une des revendications 1 à 11,
dans.lequel le système de véhicule (101) comprend un châssis de véhicule présentant un cadre de véhicule (114), lequel comprend au moins un côté longitudinal de véhicule (160) et au moins un côté transversal de véhicule (161), et
dans lequel un mécanisme de roulement est disposé dans et/ou sous le châssis de véhicule, lequel comprend au moins deux jeux de roues sur rails (7),
**caractérisé en ce que**
le châssis de véhicule du système de véhicule (101) est soulevé au moyen d'un dispositif d'appui (8) pour soulever et/ou appuyer le châssis de véhicule,
qu'un ensemble de couplage (102) est actionné pour découpler le système de véhicule (101) d'un véhicule tracteur (210), et
un dispositif de verrouillage est actionné pour verrouiller le support continu (15),
que des suspensions individuelles de roues pour route (150) peuvent être basculées d'une position (B) pour le fonctionnement sur route à une position (A) pour le fonctionnement sur rails au moyen d'un dispositif rotatif disposé sur un dispositif porteur (155) sur des pivots de suspension de roue parallèles au sens du côté longitudinal de véhicule (160) du véhicule ferroviaire (1),
qu'au moins un jeu de roues sur rails (7) est baissé de la position (B) pour le fonctionnement sur route à une position (A) pour le fonctionnement sur rails, et
que le châssis de véhicule du véhicule ferroviaire (1) est abaissé au moyen du dispositif d'appui (8) pour soulever et/ou appuyer le châssis de véhicule.
